# FASCICULE DE BREVET EUROPEEN

(11) **EP 2 376 503 B1**
(45) Date de publication et mention de la délivrance du brevet: **04.07.2018**
(21) Numéro de dépôt: 09768213.2
(22) Date de dépôt: 17.11.2009
(51) Int. Cl.: C07F 5/06, C09K 11/06, B01D 15/08, B01J 20/22

(54) **PROCEDE DE PREPARATION HYDROTHERMALE DE CARBOXYLATES D'ALUMINIUM POREUX CRISTALLISES DE TYPE "METAL-ORGANIC FRAMEWORK"**
VERFAHERN ZUR HYDROTHERMISCHEN HERSTELLUNG VON IN EINEM ORGANOMETALLISCHEN RAHMEN KRISTALLISIERTEN PORÖSEN ALUMINIUMCARBOXYLATEN
METHOD FOR HYDROTHERMAL PREPARATION OF METAL-ORGANIC FRAMEWORK CRYSTALLISED POROUS ALUMINIUM CARBOXYLATES

(30) Priorité: 18.11.2008 FR 0806449
(43) Date de publication de la demande: 19.10.2011
(73) Titulaire: Centre National de la Recherche Scientifique (C.N.R.S.), 75794 Paris Cedex 16 (FR); Université de Versailles Saint-Quentin-en-Yvelines, 78035 Versailles Cédex (FR)
(72) Inventeur: LOISEAU, Thierry, F-59700 Marcq-en-Baroeul (FR); FEREY, Gérard, F-75014 Paris (FR); VOLKRINGER, Christophe, F-67440 Thal-Marmoutier (FR); TAULELLE, Francis, F-67000 Strasbourg (FR); HAOUAS, Mohamed, F-78330 Fontenay-le-Fleury (FR)
(74) Mandataire: Novagraaf Technologies
(86) Numéro de dépôt international: PCT/FR2009/052208
(87) Numéro de publication internationale: WO 2010/058123

(56) Documents cités:
- DATABASE CA [Online] CHEMICAL ABSTRACTS SERVICE, COLUMBUS, OHIO, US; 2009, SUN, LIXIAN ET AL: "Micropore and mesopore metal organic compound and its preparation" XP002531106 extrait de STN Database accession no. 2009:37752 & CN 101 337 192 A (DALIAN INSTITUTE OF CHEMICAL PHYSICS, CHINESE ACADEMY OF SCIENCES, PEO) 7 janvier 2009 (2009-01-07)
- DATABASE CA [Online] CHEMICAL ABSTRACTS SERVICE, COLUMBUS, OHIO, US; 2009, SUN, LIXIAN ET AL: "Supported metal-porous metal organic compound composite hydrogen storage material and its preparation method" XP002531107 extrait de STN Database accession no. 2008:1169664 & CN 101 269 317 A (DALIAN INSTITUTE OF CHEMICAL PHYSICS, CHINESE ACADEMY OF SCIENCES, PEO) 24 septembre 2008 (2008-09-24)
- LOISEAU, THIERRY ET AL: "MIL-96, a Porous Aluminum Trimesate 3D Structure Constructed from a Hexagonal Network of 18-Membered Rings and .mu.3-Oxo-Centered Trinuclear Units" JOURNAL OF THE AMERICAN CHEMICAL SOCIETY , 128(31), 10223-10230 CODEN: JACSAT; ISSN: 0002-7863, 2006, XP002531103 cité dans la demande
- VOLKRINGER, C. ET AL.: "A microdiffraction set-up for nanoporous metal-organic-framework-type solids" NATURE MATERIALS, vol. 6, 2007, - 2007 pages 760-764, XP002531104 cité dans la demande
- LOISEAU, T. ET AL.: "A rationale for the large breathing of the porous aluminum terephthalate (MIL-53) upon hydration" CHEMISTRY, A EUROPEAN JOURNAL, vol. 10, 2004, - 2004 pages 1373-1382, XP002531105 cité dans la demande

## Description

### Domaine technique

La présente invention se rapporte à un procédé de préparation hydrothermale d'un solide constitué de réseau métal-organique (MOF) de carboxylates d'aluminium poreux et cristallisé, en milieu aqueux.

Elle se rapporte également aux solides constitués de réseaux métal-organiques (MOF) de carboxylates d'aluminium poreux et cristallisés susceptibles d'être obtenus par le procédé de l'invention ainsi que leurs utilisations pour le stockage des molécules liquides ou gazeuses, ou pour la séparation sélective de gaz.

Dans la description ci-dessous, les références entre crochets [] renvoient à la liste des références présentée à la fin du texte.

### Etat de la technique

Les réseaux métal-organiques ou Metal-Organic Framework en anglais (MOF) constituent une nouvelle classe de solides microporeux (voire mésoporeux pour certains d'entre eux). Elle repose sur le concept de l'assemblage tridimensionnel de ligands organiques rigides (comportant un noyau benzénique, par exemple) avec des centres métalliques. Ces derniers peuvent s'arranger pour former des clusters isolés, des chaînes infinies ou des couches inorganiques qui se connectent les uns les autres par l'intermédiaire des ligands organiques *via* des liaisons de type carboxylates ou amines. Plusieurs groupes Yaghi [1], Kitagawa [2] et Férey [3], ont exposé ce type de stratégie pour la formation de solides cristallisés offrant des charpentes tridimensionnelles avec des propriétés de porosités exceptionnelles (surface spécifique BET > 3000 m².g⁻¹).

Ce type de matériaux est habituellement caractérisé par leur surface spécifique (qui donne une idée précise de leur porosité accessible pour l'incorporation des molécules). Ces valeurs de surfaces spécifiques (exprimées en m² par gramme de matériau) sont mesurées par les méthodes Brunauer-Emmett-Teller (ou BET) qui permet d'examiner la surface des pores par chimie-sorption de l'azote à 77 K (modèle multicouche) ou Langmuir qui utilise le même procédé avec un modèle monocouche. Ces nouveaux matériaux s'avèrent être de très bons adsorbants pour les gaz tels que l'hydrogène [4-6], le méthane [7, 8] ou encore le dioxyde de carbone [8]. Ils peuvent donc être utilisés en remplacement des charbons actifs ou encore des zéolithes. De plus, ce type de solides (dont certains d'entre eux sont biocompatibles) peut trouver des applications pour l'encapsulation et le relargage contrôlé de molécules médicamenteuses [9].

D'un point de vue de la valorisation industrielle, plusieurs groupes de recherche se sont particulièrement intéressés à cette nouvelle classe émergente de matériaux poreux. En effet, la compagnie allemande BASF (Ludwigshafen, Allemagne) et le groupe de Yaghi (UCLA, USA) ont développé les procédés de synthèse et la mise en forme de nouveaux solides essentiellement à base d'éléments divalents (1^{ère} série des métaux de transition, alcalino-terreux) ou trivalents (terres rares) combinant des ligands organiques (principalement des carboxylates aromatiques) [10, 11].
Des procédés de préparation de solides incorporant des métaux comme par exemple l'aluminium et le zinc et des ligands organiques comme par exemple l'acide téréphthalique, l'acide trimésique, l'acide 2,6-naphathalènedicarboxylique ont également été décrits [12, 13].

Depuis plus d'une dizaine d'années, le groupe de Gérard Férey (Versailles) s'est intéressé à la synthèse et la caractérisation de solides poreux de type Metal-Organic Framework (MOF) en développant plusieurs axes de recherches [3], notamment la synthèse de solides MOF incorporant de l'aluminium. En particulier, la synthèse de carboxylates d'aluminium poreux cristallisés comme par exemple le téréphathalate d'aluminium MIL-53 [14], le naphthalate d'aluminium MIL-69 [15] et les trimésates d'aluminium MIL-96 [16] et MIL-110 [17] ont été décrites. MIL-n signifie Matériaux de l'Institut Lavoisier. Certains de ces solides possèdent des capacités d'adsorption des gaz (H₂, CO₂, CH₄) très intéressantes [5, 8].
Les travaux de Loiseau et al., European Journa Chemistry A, vol. 10, 2004, pages 1373-1382 concernent un procédé de synthèse d'un solide MOF « MIL-110(AI) » à partir d'un mélange réactionnel comprenant le nitrate d'aluminium, le 1,3,5-benzenetricarboxylate de triméthyle, l'acide nitrique et l'eau déionisée. Le mélange est chauffé pendant 72h dans des conditions extrêmement acides (pH=0).

Il est à noter que deux autres matériaux de la série carboxylates de zinc MOF-5 [18] et le trimésate de cuivre HKUST-1 [19] ont également été décrits.

D'autres matériaux ont été obtenus avec l'acide téréphthalique dans d'autres conditions de synthèse ou d'autres ligands (par exemple l'acide trimésique, l'acide 1,4-naphthalènedicarboxylique, l'acide 1,2,4,5-benzènetétracarboxylique) [20]. La synthèse de carboxylates d'aluminium a été décrite avec l'acide trimésique en présence de solvant DMF (N,N'-diméthylformamide) [21], avec l'acide furmarique [22] ou encore des carboxylates mixtes aluminium avec un autre métal (par exemple Ti, Mg, La, Mo) [23]. Enfin, un brevet norvégien de l'université d'Oslo [24] fait également état de la préparation de solides de type MIL-53 à partir de l'acide téréphthalique fonctionnalisé avec des groupements amino (-NH₂).

Parmi les différentes familles de composés étudiés, celle incorporant l'aluminium est plus particulièrement recherchée par les industriels du fait du faible coût à la production de ce type de matériaux. De plus, en tant qu'élement léger, les matériaux à base d'aluminium et en particulier les matériaux à base de carboxylates d'aluminium, peuvent présenter de grandes capacités de stockages de molécules telles que H₂, CH₄, CO₂, etc.

Les procédés connus pour la préparation des MOF, en particulier des MOF à base d'aluminium, ont habituellement lieu en présence de solvants organiques souvent en quantités relativement importantes. Or, lorsque de tels procédés doivent être réalisés à grande échelle, c'est-à-dire à l'échelle industrielle, l'utilisation de grandes quantités de solvant peut poser un problème : coût de production important, nuisible à l'environnement et non écologique.

Par ailleurs, les solides MOF à base d'aluminium obtenus par la plupart des procédés connus peuvent être non adaptés à l'application souhaitée car ils peuvent conduire à l'obtention d'un mélange de plusieurs matériaux, être sous forme amorphe ou encore contenir des impuretés secondaires indésirables et non éliminés lors de la préparation du solide MOF. De plus, lesdits solides ne présentent pas toujours une capacité d'adsorption suffisante.

Des étapes supplémentaires notamment de purification ou de cristallisation peuvent alors être nécessaires afin d'obtenir un solide MOF cristallisé, constitué d'une seule phase, de grande pureté (débarrassé de tout produit secondaire) et présentant une porosité suffisante.

Dans le cadre de la présente invention les termes « solide cristallisé » et « solide cristallin » peuvent être employés indifféremment pour désigner un solide dans lequel les atomes, les ions ou les molécules forment des arrangements ordonnés à longue distance dans les trois dimensions de l'espace, conduisant à une signature unique constituée par une succession spécifique de pics de diffraction (rayons X par exemple) pour chaque solide.

Un « solide amorphe » est un solide où les atomes, les ions ou les molécules, bien qu'ordonnés localement, s'empilent de façon désordonnée à longue distance. Il en résulte une signature d'un ou plusieurs pics de diffraction (rayons X par exemple) très larges qui ne permet pas l'identification précise du matériau (puisque plusieurs solides peuvent co-exister et conduire à la même signature par diffraction).

Dans de nombreux solides, les atomes, les ions ou les molécules peuvent adopter plusieurs arrangements selon les conditions de leur formation. Ces agencements différents sont les différentes « phases » existantes dans un système chimique donné. Les propriétés physiques comme le point de fusion et la densité des différentes phases se distinguent, ce qui permet la différenciation des solides.

A ce jour, il n'existe pas ou peu de procédés pour la préparation de MOF à base d'aluminium, en particulier de carboxylate d'aluminium, qui soit économique, écologique et qui puissent conduire avec de bon rendement à des carboxylates d'aluminium de type MOF avec les propriétés de pureté, de porosité et de cristallinité requises.

Il existe donc un réel besoin d'un procédé de préparation de carboxylates d'aluminium poreux et cristallisés de type réseaux métal-organiques ou MOF palliant les défauts, inconvénients et obstacles de l'art antérieur.

En particulier, il existe un réel besoin d'un procédé qui soit reproductible, écologique, industriellement réalisable et qui permette la préparation de carboxylates d'aluminium poreux, cristallisés de type réseaux métal-organiques ou MOF.

### Description de l'invention

La présente invention a précisément pour but de répondre à ce besoin en fournissant un procédé de préparation hydrothermale d'un solide constitué de réseau métal-organique (MOF) de carboxylates d'aluminium poreux et cristallisé, comprenant au moins les étapes suivantes :
(i) on mélange dans un solvant aqueux :
   - au moins un précurseur inorganique métallique se présentant sous la forme de métal Al, d'un sel de métal Al³⁺ ou d'un complexe de coordination comprenant l'ion métallique Al³⁺ ; et
   - au moins un précurseur organique du ligand L, L étant un ligand tri- ou tétra-carboxylate de formule R⁰(COO⁻)_{q} où R⁰ représente
      - un radical aryle mono- ou poly-cyclique, fusionné ou non, comprenant de 6 à 50 atomes de carbone,
      - un radical hétéroaryle mono- ou poly-cyclique, fusionné ou non, comprenant de 4 à 50 atomes de carbone,
         le radical R⁰ étant éventuellement substitué par un ou plusieurs groupes indépendamment choisis dans le groupe comprenant C₁₋₁₀alkyle, C₂₋₁₀alcène, C₂₋₁₀alcyne, C₃₋₁₀cycloalkyle, C₁₋₁₀hétéroalkyle, C₁₋₁₀haloalkyle, C₆₋₁₀aryle, C₃₋₂₀hétérocyclique, C₁₋₁₀alkylC₆₋₁₀aryle, C₁₋₁₀alkylC₃₋₁₀hétéroaryle, F, Cl, Br, I, -NO₂, -CN, -CF₃, -CH₂CF₃, -OH, -CH₂OH, - CH₂CH₂OH, -NH₂, -CH₂NH₂, -NHCHO, -COOH, -CONH₂, -SO₃H, -PO₃H₂,
      - q = 3à4;
(ii) on ajuste le pH du mélange à un pH compris entre 0,4 et 0,7
(iii) on chauffe le mélange obtenu en (ii) pendant une durée de 1 à 24 heures, à une température supérieure à 130°C de manière à obtenir ledit solide, et dans lequel dans l'étape (i) le précurseur inorganique métallique et le précurseur organique du ligand L sont mélangés dans un rapport molaire compris entre 1 et 5.

Un procédé de préparation hydrothermale est un procédé qui permet la cristallisation de matériaux (composés chimiques), directement à partir d'une solution aqueuse qui peut être l'eau. Ce type de procédé est un mode de préparation moins coûteux et plus écologique liés à l'absence de solvants organiques (qui ne sont éventuellement utilisés que pour des opérations de lavages en vue de leur activation).

Le terme « hydrothermal » fait référence à un protocole de réaction hétérogène en présence d'eau dans des conditions de pressions et températures élevées qui permettent la dissolution et la cristallisation de matériaux ; lesquels sont relativement insolubles à température et pression ambiantes [25].

Rabenau [26] précise que les réactions en conditions hydrothermales sont réalisées à partir de systèmes chimiques hétérogènes qui ont lieu dans l'eau sous une pression supérieure à 10⁵ Pa et une température supérieure à 100°C.

On entend par « alkyle » au sens de la présente invention, un radical carboné linéaire ou ramifié saturé éventuellement substitué, comprenant 1 à 12 atomes de carbone, par exemple 1 à 10 atomes de carbone, par exemple 1 à 8 atomes de carbone, par exemple 1 à 6 atomes de carbone. Par exemple, un radical alkyle peut-être un radical méthyle, éthyle, n-propyle, isopropyle, n-butyle, sec-butyle, isobutyle, tert-butyle, n-pentyle, sec-pentyle, isopentyle, tert-pentyle, n-hexyle, sec-hexyle ou radicaux similaires.

On entend par « alcène » au sens de la présente invention, un radical hydrocarbure insaturé linéaire ou ramifé, cyclique ou acyclique, comprenant au moins une double liaison carbone-carbone. Le radical alcényle peut comprendre de 2 à 20 atomes de carbone, par exemple de 2 à 10 atomes de carbone, plus particulièrement de 2 à 8 atomes de carbone, encore plus particulièrement de 2 à 6 atomes de carbone. Par exemple, un radical alcényle peut-être un radical allyle, éthenyle, propenyle, butenyle, 1-méthyl-2-buten-1-yle ou radicaux similaires.

Le terme "alcyne" désigne un radical hydrocarbure insaturé linéaire ou ramifé, cyclique ou acyclique, comprenant au moins une triple liaison carbone-carbone. Le radical alcynyle peut comprendre de 2 à 20 atomes de carbone, de préférence de 2 à 10 atomes de carbone, plus particulièrement de 1 à 8 atomes de carbone, encore plus particulièrement de 2 à 6 atomes de carbone. Par exemple, un radical alcynyle peut-être un radical éthynyle, 2-propynyle (propargyle), 1-propynyle ou radicaux similaires.

On entend par « aryle » au sens de la présente invention, un système aromatique comprenant au moins un cycle satisfaisant la règle d'aromaticité de Hückel. Ledit aryle est éventuellement substitué et peut comprendre de 6 à 50 atomes de carbone, par exemple 6 à 27 atomes de carbone, notamment de 6 à 14 atomes de carbone, plus particulièrement de 6 à 12 atomes de carbone. Par exemple, un radical aryle peut être un groupe phényle, naphthyle, tétrahydronaphthyle, indanyle, indényle ou radicaux similaires.

On entend par « hétéroaryle » au sens de la présente invention, un système comprenant au moins un cycle aromatique de 4 à 50 atomes de carbone, par exemple de 4 à 20 atomes de carbone, et au moins un hétéroatome choisi dans le groupe comprenant notamment le soufre, l'oxygène, l'azote. Ledit hétéroaryle peut être substitué. Par exemple, un radical hétéroaryle peut être un radical pyridyle, pyrazinyle, pyrimidinyle, pyrrolyle, pyrazolyle, imidazolyle, thiazolyle, oxazolyle, isooxazolyle, thiadiazolyle, oxadiazolyle, thiophenyle, furanyle, quinolinyle, isoquinolinyle, et radicaux similaires.

On entend par « cycloalkyle » au sens de la présente invention, un radical carboné cyclique, saturé ou insaturé, éventuellement substitué, qui peut comprendre 3 à 10 atomes de carbone. On peut citer par exemple le cyclopropyl, le cyclobutyle, le cyclopentyle, le cyclohexyle, le cycloheptyle, le cyclooctyle, le 2-methylcyclobutyle, le 2,3-dimethyl-cyclobutyle, le 4-methylcyclobutyle, le 3-cyclopentylpropyle.

On entend par « haloalkyle » au sens de la présente invention, un radical alkyle tel que défini précédemment, ledit système alkyle comprenant au moins un halogène choisi dans le groupe comprenant le fluor, le chlore, le brome, l'iode.

On entend par « hétéroalkyle » au sens de la présente invention, un radical alkyle tel que défini précédemment, ledit système alkyle comprenant au moins un hétéroatome, notamment choisi dans le groupe comprenant le soufre, l'oxygène, l'azote, le phosphore.

On entend par « hétérocycle » au sens de la présente invention, un radical carboné cyclique comprenant au moins un hétéroatome, saturé ou insaturé, éventuellement substitué, et qui peut comprendre 3 à 20 atomes de carbone, de préférence 5 à 20 atomes de carbone, de préférence 5 à 10 atomes de carbone. L'hétéroatome peut être par exemple choisi dans le groupe comprenant le soufre, l'oxygène, l'azote le phosphore. Par exemple, un radical hétérocyclique peut être un groupe pyrrolidinyle, pyrazolinyle, pyrazolidinyle, imidazolinyle, imidazolidinyle, piperidinyle, piperazinyle, oxazolidinyle, isoxazolidinyle, morpholinyle, thiazolidinyle, isothiazolidinyle, ou tetrahydrofuryle.

On entend par « alkoxy », « aryloxy », « hétéroalkoxy » et « hétéroaryloxy » au sens de la présente invention, respectivement un radical alkyle, aryle, hétéroalkyle et hétéroaryle liés à un atome d'oxygène. Par exemple, un radical alcoxy peut être un radical méthoxy, éthoxy, propoxy, isopropoxy, n-butoxy, tert-butoxy, neopentoxy, n-hexoxy, ou un radical similaire.

Le terme « substitué » désigne par exemple le remplacement d'un atome d'hydrogène dans une structure donnée par un groupe tel que défini précédemment. Lorsque plus d'une position peut être substituée, les substituants peuvent être les mêmes ou différents à chaque position.

Dans le contexte de l'invention, le solvant aqueux peut être exclusivement constitué d'eau. Il peut également être constitué d'un mélange de solvants contenant au moins 75% en poids, de préférence 85% en poids, encore plus préférentiellement au moins 95% en poids d'eau par rapport au poids total de tous les solvants.

Les solvants pouvant être utilisés en mélange avec de l'eau peuvent être choisis dans le groupe comprenant les alcools primaires, secondaires ou tertiaires, notamment le méthanol, l'éthanol, le n-propanol, l'isopropanol, le n-butanol, l'isobutanol or tert-butanol.

Le précurseur inorganique métallique dans l'étape (i) peut se présenter sous la forme de métal Al, d'un sel de métal Al³⁺ ou d'un complexe de coordination comprenant l'ion métallique Al³⁺. De préférence, le précurseur inorganique métallique présente sous forme de métal Al ou d'un sel de métal Al³⁺. Lorsqu'il s'agit de sel de métal, le contre-ion peut être un ion inorganique choisi dans le groupe comprenant le sulfate, le nitrate, le nitrite, le sulfite, le bisulfite, le phosphate, le phosphite, le chlorure, le perchlorate, le bromure, l'iodure, le carbonate, le bicarbonate. Le contre-ion peut également être un ion organique choisi dans le groupe comprenant les acétates, les formates, les oxalates, les isopropoxydes, les éthoxydes.

L'organisation spatiale cristalline des solides de la présente invention est à la base des caractéristiques et propriétés particulières de ces matériaux. Elle régit notamment la taille des pores, qui a une influence sur la surface spécifique des matériaux et sur les caractéristiques d'adsorption. Elle régit également la densité des matériaux, celle-ci étant relativement faible, la proportion de métal dans ces matériaux, la stabilité des matériaux, la rigidité et la flexibilité des structures, etc.

En outre, la taille des pores peut être ajustée par le choix de ligands L appropriés. Dans le procédé de l'invention, les ligands appropriés L peuvent être un ligand tri- ou tétra-carboxylate choisi dans le groupe comprenant : C₆H₃(CO₂⁻)₃(benzène-1,2,4-tricarboxylate), C₆H₃(CO₂⁻)₃(benzène-1,3,5-tricarboxylate), C₂₄H₁₅(CO₂⁻)₃(benzène-1,3,5-tribenzoate), C₄₂H₂₇(CO₂⁻)₃(1,3,5-tris[4'-carboxy(1,1'-biphenyl-4-yl)benzene), C₆H₂(CO₂⁻)₄(benzène-1,2,4,5-tétracarboxylate, C₁₀H₄(CO₂⁻)₄(naphtalène-2,3,6,7-tétracarboxylate), C₁₀H₄(CO₂⁻)₄ (naphtalène-1,4,5,8-tétracarboxylate), C₁₂H₆(CO₂⁻)₄(biphényl-3,5,3',5'-tétracarboxylate).

Il est aussi décrit (sans les revendiquer) des ligands L di-, tri- ou tétra-carboxylate choisis dans le groupe comprenant : C₂H₂(CO₂⁻)₂(fumarate), C₂H₄(CO₂⁻)₂(succinate), C₃H₆(CO₂⁻)₂(glutarate), C₄H₄(CO₂⁻)₂(muconate), C₄H₈(CO₂⁻)₂(adipate), C₅H₃S(CO₂⁻)₂(2,5-thiophènedicarboxylate), C₆H₄(CO₂⁻)₂ (téréphtalate), C₆H₂N₂(CO₂⁻)₂(2,5-pyrazine dicarboxylate), C₁₀H₆(CO₂⁻)₂ (naphtalène-2,6-dicarboxylate), C₁₂H₈(CO₂⁻)₂(biphényle-4,4'-dicarboxylate), et les analogues modifiés choisis dans le groupe comprenant le 2-aminotéréphtalate, le 2-nitrotéréphtalate, le 2-méthyltéréphtalate, le 2-chlorotéréphtalate, le 2-bromotéréphtalate, le 2,5-dihydroxotéréphtalate, le tétrafluorotéréphtalate, le 2,5-dicarboxy téréphtalate, le diméthyl-4,4'-biphénydicarboxylate, le tétraméthyl-4,4'-biphénydicarboxylate, le dicarboxy-4,4'-biphénydicarboxylate. De préférence les ligands L sont C₆H₃(CO₂⁻)₃(benzène-1,3,5-tricarboxylate), ou (benzène-1,2,4,5-tétra-carboxylate)C₁₀H₄(CO₂⁻)₄.

Le précurseur organique du ligand L peut être par exemple sous forme d'acide ou d'ester. L'ester peut être par exemple un alkyle ester dans lequel le radical alkyle peut être un radical méthyle, éthyle, propyle, butyle, pentyle, hexyle, heptyle, octyle.

Comme déjà indiqué, les solides MOF selon l'invention possèdent une structure cristallisée qui procure à ces matériaux des propriétés spécifiques. Un paramètre important pouvant influencer la cristallisation est le pH. Dans le procédé selon l'invention, la cristallisation se fait dans un domaine de pH très restreint.

Selon un mode de réalisation particulier de l'invention, le pH initial du mélange est ajusté à 0,6 et le pH final à un pH allant de 1,5 à 1,8.

Le pH sera ajusté en fonction de la composition exacte du mélange et de la dynamique de la réaction sur la base des valeurs estimatives données dans les exemples.

Selon le procédé de l'invention, dans l'étape (ii) le pH du mélange peut être ajusté par ajout d'un acide ou d'une base.

Les acides pouvant convenir dans l'étape (ii) sont avantageusement ceux qui n'ont ni de l'influence sur la structure des MOF ni sur leur procédé de préparation. A titre d'exemple, on peut citer les acides minéraux choisis dans le groupe comprenant HCl, HNO₃, H₂SO₄. En particulier, l'acide est HNO₃.

Dans l'étape (ii), lorsque le pH est ajusté par ajout d'une base minérale, la base peut être avantageusement un hydroxyde alcalin choisi dans le groupe comprenant LiOH, NaOH, KOH.

Le procédé de préparation d'un solide selon l'invention, constitué de réseau métal-organique (MOF) de carboxylates d'aluminium poreux et cristallisé, se fait à une température supérieure à 130°C. De préférence, dans l'étape (iii), le mélange obtenu en (ii) est chauffé à une température de 140°C à 220°C. Le mélange peut être chauffé pendant 1 à 24 heures, par exemple pendant 1 à 5 heures.

L'étape (iii) est réalisée avantageusement à une pression autogène supérieure à 10⁵ Pa. Une pression « autogène » est la pression générée par les réactifs à une température donnée dans une cellule de réaction close.

Le solide obtenu à l'issu de l'étape (iii) peut, en outre, être soumis à une étape d'activation (iv) dans laquelle ledit solide est chauffé à une température comprise de 50°C à 450°C, avantageusement de 80°C à 350°C. Dans cette étape, le solide peut être chauffé pendant 1 à 36 heures.

L'étape d'activation (iv) peut éventuellement se faire dans un solvant choisi dans le groupe comprenant le diméthylformamide ou DMF, le diéthyleformamide ou DEF, le méthanol, l'éthanol, le diméthylsulfoxyde ou DMSO.

Cette étape d'activation (iv) permet de vider les pores du solide MOF de l'invention et de les rendre accessibles pour l'utilisation envisagée dudit solide. Le vidage peut se faire, par exemple, par le départ des molécules d'eau, d'acide, de base, de solvant et/ou le cas échéant des molécules de ligands L présents dans le milieu réactionnel. Les solides MOF résultants possèderont alors une plus forte capacité d'adsorption et de stockage.

La présente invention a également pour objet un solide constitué de réseau métal-organique (MOF) de carboxylates d'aluminium poreux et cristallisé susceptible d'être obtenu par le procédé de l'invention, comprenant une succession tridimensionnelle de motifs de formule (I):

AlₘOₖXₗLₚ (I)

dans laquelle :
▪ Al représente l'ion métallique Al³⁺ ;
▪ m est de 1 à 15, par exemple de 1 à 8 ;
• k est 0 à 15 , par exemple de 1 à 8 ;
▪ l est 0 à 10, par exemple de 1 à 8 ;
▪ p est 1 à 10, par exemple de 1 à 5 ;
   m, k, l et p sont choisis de façon à respecter la neutralité des charges dudit motif ;
▪ X est un anion choisi dans le groupe comprenant OH⁻, Cl⁻, F⁻, I⁻, Br, SO₄²⁻, NO₃⁻, ClO₄⁻, PF₆⁻, BF₃⁻, R¹-(COO⁻)ₙ, R¹-(SO₃⁻)ₙ, R¹-(PO₃⁻)ₙ, où R¹ est un hydrogène, un alkyle en C₁ à C₁₂, linéaire ou ramifié, éventuellement substitué, n = 1 à 4 ;
▪ L est un ligand tri- ou tétra-carboxylate tel que défini précédemment (cf. ligands L appropriés *supra*).

Les solides MOF de carboxylates d'aluminium préparés par le procédé de l'invention présentent certains avantages notamment :
- il s'agit de solides cristallisés (la cristallisation se fait dans un domaine de pH bien défini),
- ayant une grande pureté (aucun produit secondaire comme par exemple l'hydroxyde d'aluminium n'est détecté, et
- présentant une porosité significative (surface de Langmuir jusqu'à 3500 m².g⁻¹) permettant de contrôler notamment les caractéristiques d'adsorption de certaines molécules.

De préférence, X est choisi dans le groupe comprenant OH⁻, Cl⁻, F⁻, ClO₄⁻.

Les solides MOF selon l'invention comprennent de préférence un pourcentage massique d'Al en phase sèche (ou déshydratée) de 5 à 50%.

Les solides MOF susceptibles d'être obtenus par le procédé de l'invention possèdent des pores, et plus particulièrement des micro- et/ou des mésopores. Les micropores peuvent être définis comme des pores ayant un diamètre inférieur ou égale à 2 nm (diamètre ≤ 2nm) et les mésopores comme des pores ayant un diamètre supérieur à 2 nm et pouvant aller jusqu'à 50 nm (2nm < diamètre < 50nm). De préférence, le diamètre des pores du solide MOF de l'invention est de 0,2 à 6 nm. La présence des micro- et mésopores peut être suivie par des mesures de sorption pour déterminer la capacité du solide MOF à absorber l'azote à 77K selon DIN 66131.

La surface spécifique des solides constitués de réseaux métal-organiques (MOF) de carboxylates d'aluminium poreux et cristallisés susceptible d'être obtenus par le procédé de l'invention peut être mesurée par la méthode BET et/ou déterminée et calculée par le modèle Langmuir. Lesdits solides peuvent présenter une surface spécifique BET allant de 50 à 4200 m²/g, en particulier allant de 100 à 2500 m²/g. Ils peuvent également présenter une surface spécifique Langmuir allant de 50 à 6000 m²/g, en particulier allant de 150 à 3500 m²/g.

Les solides MOF selon l'invention présentent avantageusement un volume poreux de 0,1 à 4 cm³/g. Dans le cadre de l'invention, le volume poreux signifie le volume accessible pour les molécules de gaz ou de liquide par gramme de produit.

Dans le cadre de la présente invention, les solides MOF peuvent avoir une capacité de charge en gaz de 0,5 à 50 mmol de gaz par gramme de solide sec. La capacité de charge signifie la capacité de stockage de gaz ou la quantité de gaz adsorbé par le solide. Ces valeurs et cette définition s'applique également à la capacité de charge en liquide.

Les solides MOF de la présente invention peuvent présenter notamment l'avantage d'avoir une stabilité thermique jusqu'à une température de 500°C. Plus particulièrement, ces solides peuvent présenter une stabilité thermique entre 250°C et 430°C.

Les solides MOF de l'invention sont cristallisés et peuvent être, de préférence, sous forme de cristallites avec une longueur qui varie de 0,1 µm à 150 µm. Ils se présentent en particulier, sous formes de petits cristaux présentant une morphologie particulière (aiguilles, plaquettes, octaèdres etc.) qui permet aussi leur identification précise par examen à l'aide d'un microscope électronique à balayage (MEB).

Comme déjà indiqué, les solides MOF selon l'invention possèdent une structure cristallisée et une grande pureté qui procurent à ces matériaux des propriétés spécifiques.

Contrairement aux solides connus, les solides MOF de carboxylates d'aluminium obtenus selon l'invention sont constitutés d'une seule phase unique exempt d'impuretés, cristallisée et bien identifiée. Cela signifie que les autres phases (< 2% en masse) pouvant exister dans le système chimique considéré ne sont pas présentes en mélange avec le solide MOF selon l'invention.

Les solides MOF de carboxylates d'aluminium susceptibes d'être obtenus par un procédé de préparation hydrothermale tel que décrit précédemment présentent, en outre, un degré de pureté d'au moins 95%, en particulier d'au moins 98 % en masse. La pureté des solides MOF de l'invention peut être déterminée notamment par analyse chimique élémentaire, diffraction des rayons X, microscopie éléctronique à balayage et RMN du solide de l'aluminium 27 (²⁷Al) et cabone 13 (¹³C). De ce fait, les solides MOF obtenus, ne comportent pas ou peu de produit secondaire comme par exemple l'hydroxyde d'aluminium de formule Al(OH)₃ ou AIO(OH) ou encore les autres phases du système chimique considéré apparaissant dans d'autres conditions de synthèse (par exemple en opérant à des intervalles de pH dfférents de ceux indiqués dans le procédé de l'invention invention). Ceci peut être une conséquence du mode de préparation hydrothermale qui permet l'obtention des solides MOF de carboxylates d'aluminium directement à partir d'une solution aqueuse qui peut être l'eau, et ce avec un contrôle approprié des variables thermodynamiques (température, pression etc.)

Les caractéristiques structurales particulières des solides de la présente invention, en font des adsorbants de grande capacité de charge, de grande sélectivité et de grande pureté. Ils rendent donc possible l'adsorption sélective et donc la séparation sélective de molécules de gaz comme par exemple des molécules de NO, N₂, H₂S, H₂, CH₄, O₂, CO, CO₂.
La présente invention a également pour objet, l'utilisation d'un solide constitué de réseau métal-organique (MOF) de carboxylates d'aluminium poreux et cristallisé pour le stockage des molécules liquides ou gazeuses, ou pour la séparation sélective de gaz [27].
Il est également décrit dans le présent document l'utilisation d'un solide constitué de réseau métal-organique (MOF) de carboxylates d'aluminium poreux et cristallisé tel que décrit *supra* pour la catalyse [28].

D'autres avantages pourront encore apparaître à l'homme du métier à la lecture des exemples ci-dessous, illustrés par les figures annexées, donnés à titre illustratif.

### Brève description des figures

- La figure 1 représente le diagramme de diffraction RX de la phase MIL-100 (Al) (CuK_{α}). L'abscisse représente la variation angulaire en 2θ (°). L'ordonné représente l'intensité relative des pics de diffraction.
- La figure 2 représente l'isotherme d'adsorption N₂ à 77K de la phase MIL-100. Le rapport p/p⁰ qui correspond à la pression relative est donné en abscisse. Le volume de gaz adsorbé par gramme de produit (cm³.g⁻¹) est représenté en ordonné.
- La figure 3 représente la courbe de l'analyse thermogravimétrique de MIL-100 (Al) (sous flux d'O₂, 3°C.min⁻¹). Le pourcentage de la perte de masse est représenté en ordonné. La température de chauffage est représentée en abscisse.
- La figure 4 représente la photographie (microscopie électronique à balayage) d'un échantillon de MIL-100 (Al) montrant des cristallites sous forme d'octaèdres d'un micron.
- La figure 5 représente le diagramme de diffraction RX de la phase MIL-120 (Al) (CuK_{α}). L'abscisse représente la variation angulaire en 2θ (°). L'ordonné représente l'intensité relative des pics de diffraction.
- La figure 6 représente le isotherme d'adsorption N₂ à 77K de la phase MIL-120 (Al). Le rapport p/p⁰ qui correspond à la pression relative est donné en abscisse. Le volume de gaz adsorbé par gramme de produit (cm³.g⁻¹) est représenté en ordonné.
- La figure 7 représente la courbe de l'analyse thermogravimétrique de MIL-120 (Al) (sous flux d'O₂, 3°C.min⁻¹). Le pourcentage de la perte de masse est représenté en ordonné. La température de chauffage est représentée en abscisse.
- La figure 8 représente la photographie (microscopie électronique à balayage) d'un échantillon de MIL-120 (Al) montrant des cristallites sous forme d'aiguilles de 5 à 30 microns.
- La figure 9 représente le diagramme de diffraction RX de la phase MIL-121 (Al) (CuK_{α}). L'abscisse représente la variation angulaire en 2θ (°). L'ordonné représente l'intensité relative des pics de diffraction.
- La figure 10 représente l' isotherme d'adsorption N₂ à 77K de la phase MIL-121 (Al). Le rapport p/p⁰ qui correspond à la pression relative est donné en abscisse. Le volume de gaz adsorbé par gramme de produit (cm³.g⁻¹) est représenté en ordonné.
- La figure 11 représente la courbe de l'analyse thermogravimétrique de MIL-121 (Al) (sous flux d'O₂, 1°C.min⁻¹). Le pourcentage de la perte de masse est représenté en ordonné. La température de chauffage est représentée en abscisse.
- La figure 12 représente la photographie (microscopie électronique à balayage) d'un échantillon de MIL-121 (Al) montrant des cristallites sous forme de parallélépipèdes de 2 à 5 microns.

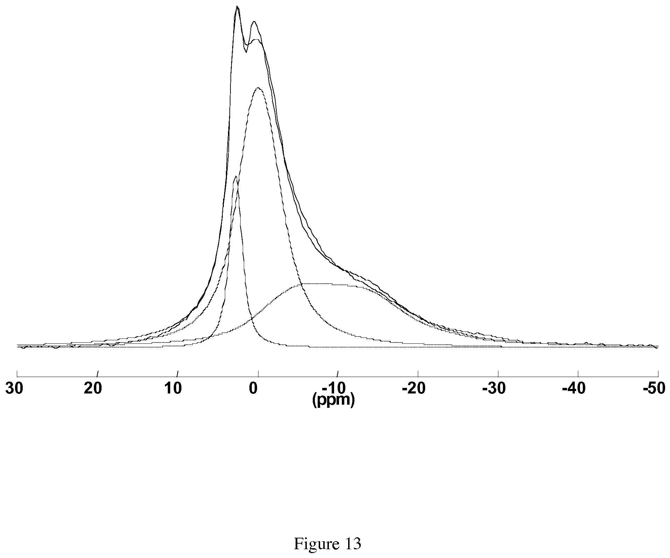

- La figure 13 représente le spectre RMN MAS ²⁷Al (30 kHz) de MIL-100(Al), mesuré avec un spectromètre Bruker AVANCE-500 (rotor 2,5 mm).

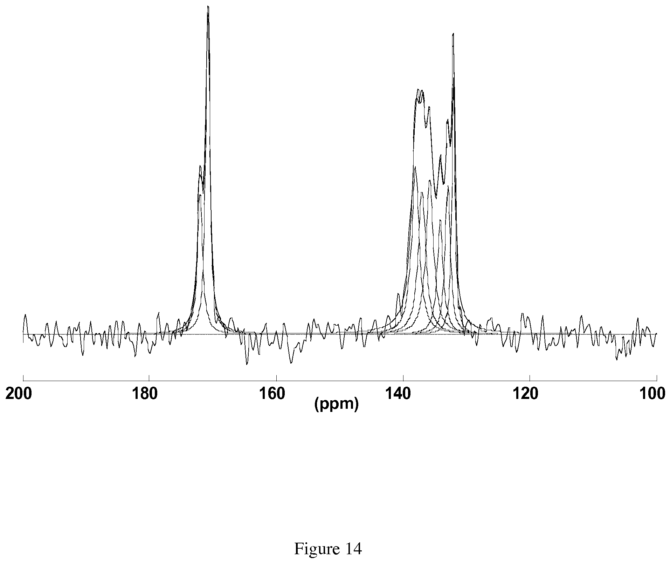

- La figure 14 représente le spectre RMN CPMAS ¹³C{¹H} (12,5 kHz) de MIL-100 (Al), mesuré avec un spectromètre Bruker AVANCE-500 (rotor 2,5 mm).

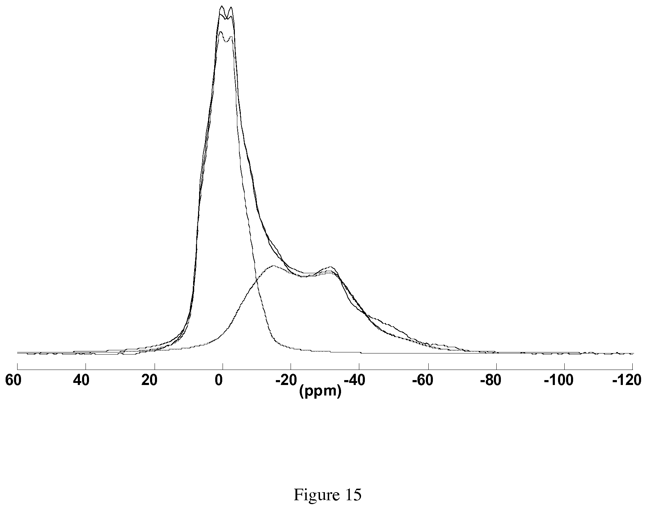

- La figure 15 représente le spectre MAS RMN ²⁷Al (30kHz) de MIL-120(Al), mesuré avec un spectromètre Bruker AVANCE-500 (rotor 2,5 mm).

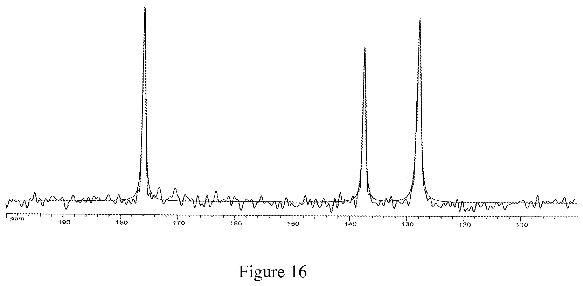

- La figure 16 représente le spectre RMN CPMAS ¹³C{¹H} (10 kHz) de MIL-120 (Al), mesuré avec un spectromètre TecMag Apollo-200 (rotor 4 mm).

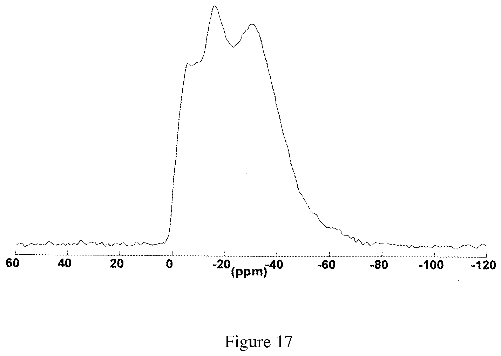

- La figure 17 représente le spectre RMN MAS ²⁷Al (30 kHz) de MIL-121 (Al), mesuré avec un spectromètre Bruker AVANCE-500 (rotor 2,5 mm).

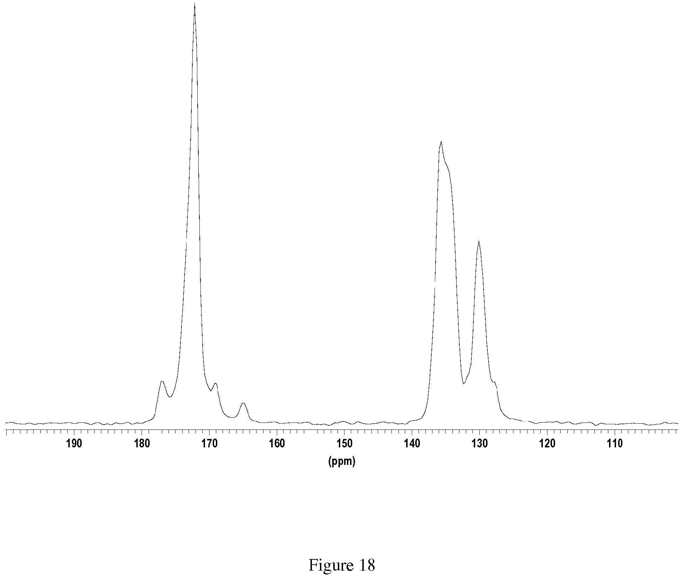

- La figure 18 représente le spectre RMN CPMAS ¹³C{¹H} (12,5 kHz) de MIL-121 (Al), mesuré avec un spectromètre Bruker AVANCE-500 (rotor 2,5 mm).
- La figure 19 représente les spectres RMN ¹H (a) MAS et (b) ¹H{²⁷Al} TRAPDOR de MIL-100(Al) montrant les signaux d'eau à < 5 ppm, de la structure supplémentaire btc à < 8 ppm, et de la structure btc à < 9 ppm. Tous les pectres sont enregistrés à 500 MHz et avec une vitesse de spin de 30 kHz.
- La figure 20 représente RMN ²⁷Al MAS de MIL-100 (a), et traitement thermique ultérieure à 130°C (b), et puis ré-hydratation tout la nuit (c) au-dessus une solution NaCl dans un séparateur fermé (d) montrant la formation réversible de sites de coordination insaturés (CUS) sur un cycle déshydratation/réhydration. La durée du traitement thermique est de 4 à 6h. Les spectres dans (a) et (b) sont obtenus par des expériences avec des impulsions simples, alors que dans (b) et (c) par des expériences avec un écho entier.
- La figure 21 représente le spectre RMN ²⁷Al Multi-Quanta avec Rotation à l'angle magique (MQMAS) de MIL-100 déshydraté à 150 °C. De 0 à -10 ppm, les sites hexacoordinnés sont présents et peuvent être résolus dans la dimension indirecte (vertical sur le dessin) par leurs déplacements chimiques, et de 30 à 40 ppm des sites pentacoordinnés sont présents, et la dimension indirecte montre qu'ils sont résolus en deux types de sites.
- La figure 22 représente les diffractogrammes des rayons X (radiation de cuivre) des échantillons de MIL-100(Al)_as (tel que synthétisé), de MIL-100(Al)_ac (activé), comparés à deux autres phases MIL-96_as et MIL-110_as (telles que synthétisées), ayant lieu dans le diagramme de phase Al/btc/H₂O (btc = 1,3,5-benzènetricarboxylate).

### EXEMPLES

Les exemples qui suivent décrivent la synthèse hydrothermale de 3 différents solides constitués de réseaux métal-organiques (MOF) de carboxylates d'aluminium microporeux (notés MIL-n) obtenus avec des ligands de type carboxylate aromatique et plus particulièrement avec plus particulièrement sur l'utilisation les ligands 1,3,5-benzène tricarboxylate et 1,2,4,5-benzènetétracarboxylate.

Les composés (notés MIL-n) synthétisés ont ensuite été caractérisés par diffraction des rayons X sur poudre, analyse thermogravimétrique, microscopie électronique à balayage (MEB) et leurs surfaces spécifiques ont été mesurées par la méthode BET.

Les diagrammes de diffraction ont été enregistrés à l'aide d'un diffractomètre (Siemens D5000) en géométrie Bragg-Brentano en réflexion sur un domaine angulaire en 2theta de 2 à 40° avec un pas et un temps de comptage de 0.02° et de 1 seconde, respectivement (radiation CuK_{α1,2}).

L'analyse thermogravimétrique (TA Instrument 2050) a été réalisé à partir d'un échantillon de 5 ou 20 mg chauffé sur une balance de 20 à 600°C sous flux d'oxygène avec une vitesse de chauffage de 3°C.min⁻¹.

Pour l'examen au microscope électronique à balayage (LEO 1530), les échantillons ont été métallisé avec du carbone puis placé dans une chambre sous vide sous le faisceau d'électrons.

Les surfaces spécifiques ont été mésurées sur un appareil Micromeritics ASAP2010 à partir de 100 mg d'échantillons qui ont été préalablement chauffé à 200°C sous vide pendant 12 heures.

### Exemple 1 : Préparation de MIL-100 (Al)

Le composé MIL-100 (Al) est un analogue des matériaux au chrome (III) et fer (III) déjà décrits dans la littérature par notre laboratoire. Cette phase est obtenue à partir d'un mélange de 1,314 g de nitrate d'aluminium (Al(NO₃)₃·9H₂O), 0,596 g de triméthyl-1,3,5-benzènetricarboxylate, 4,4 ml d'acide nitrique (HNO₃ 1 M) et 16 ml d'eau placés dans une cellule en téflon d'un volume de 125 ml puis insérée dans un autoclave en acier de marque commerciale Parr (marque de commerce). La réaction a lieu à 210°C pendant 3h30 dans un four (montée de température 1 h). 0,55 g de MIL-100 (Al) est obtenu. Le pH de la réaction est de 1,8.

Une seconde préparation peut être réalisée à partir d'un mélange de 7,485 g de nitrate d'aluminium (Al(NO₃)₃·9H₂O), 3,39 g de triméthyl-1,3,5-benzènetricarboxylate, 25 ml d'acide nitrique (HNO₃ 1 M) et 91,29 ml d'eau placés dans une cellule en téflon d'un volume de 500 ml puis un autoclave en acier de type de marque commerciale Parr (marque enregistrée). La réaction a lieu à 210°C pendant 3h30 dans un four (montée de température 1 h). 3,45 g de MIL-100 (Al) est obtenu. Le pH de la réaction est de 1,8. Les produits résultants consistent en une poudre jaune homogène qui est filtrée et lavée avec de l'eau désionisée, à température ambiante.

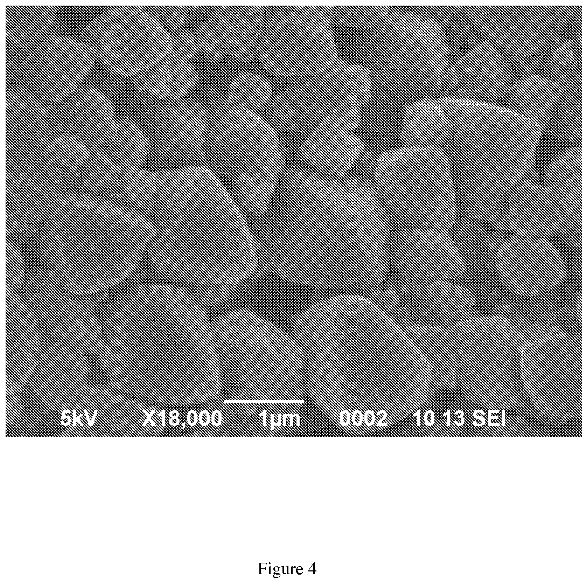

L'examen de ce solide au microscope électronique révèle la présence de petits cristaux de forme octaédrique avec une taille moyenne d'un micron (figure 4).

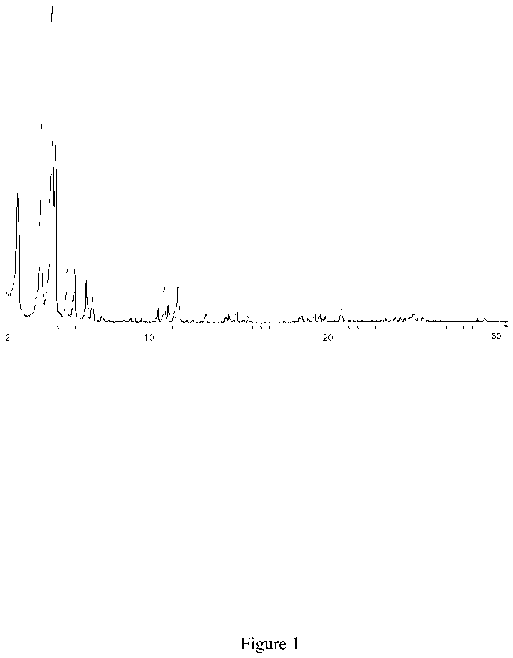

Le diffractogramme RX est présenté en figure 1. Ce solide cristallise dans une maille cubique avec les paramètres a = b = c = 71,687(3) Å, V = 368401(3) A3.

L'activation de ce produit est la suivante : un gramme de MIL-100 (Al) et 40 ml de DMF (N,N'-diméthylformamide) sont placés dans une enceinte hydrothermale de 125 ml et chauffé à 150°C pendant 4 heures. Après filtration, le composé blanc est lavé avec de l'eau distillée sous reflux à 100°C pendant 12 heures puis de nouveau filtré à température ambiante.

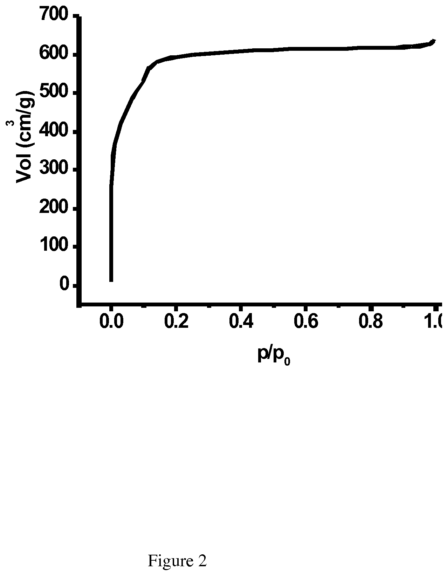

La surface BET mesurée est de 2150 m².g⁻¹ et la surface de Langmuir est de 2900 m².g⁻¹ (figure 2).

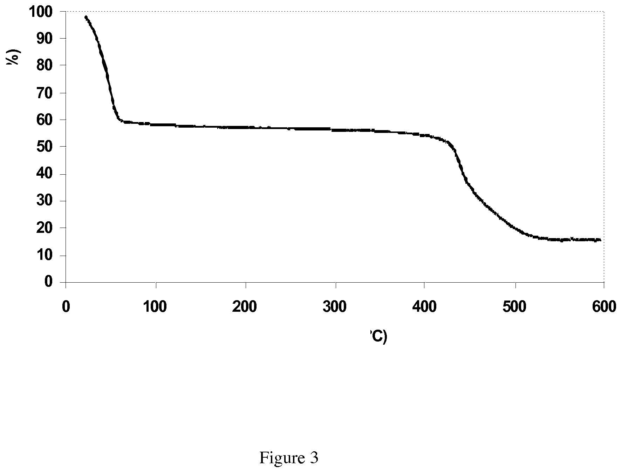

L'analyse thermogravimétrique indique que le matériau MIL-100 (Al) est stable jusqu'à 350°C (figure 3).

La combinaison de ces différentes analyses de caractérisation montre bien qu'il s'agit d'un matériau très bien identifié avec une très grande pureté cristalline.

### Propriétés de MIL-100 (Al)

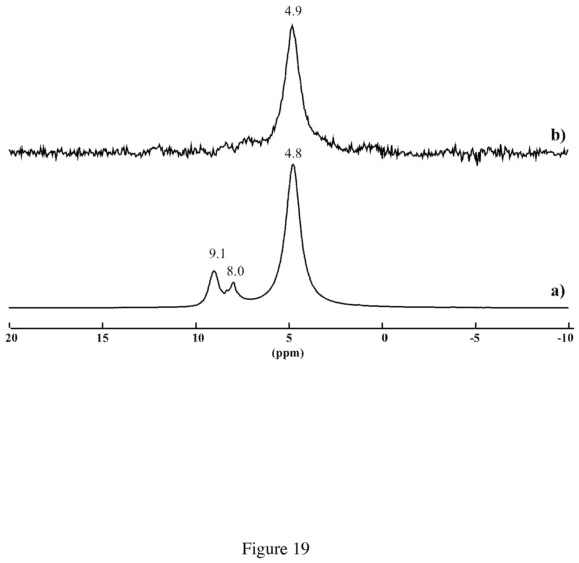

Le spectre ¹H RMN en phase solide (Figure 19a) de MIL-100(Al) révèle trois écho signaux principaux à 4.8, 8.0, and 9.1 ppm attribués à l'eau, aux protons aromatiques de la structure supplémentaire H₃btc et de la structure btc respectivement. L'eau est présente et adsorbée remplissant les pores du composé ainsi que le ligand terminal lié aux unités trimère Al₃ de la structure. Afin d'établir la proximité entre les molécules d'eau liées et la structure Al, une expérience ¹H/²⁷Al TRAPDOR est effectuée [29]. L'expérience TRAPDOR est conçue pour mesurer les interactions dipolaires entre deux spins différents dans des conditions de rotation à l'angle magique (Magic Angle Spinning en anglais ou MAS). TRAPDOR consiste en deux expériences différentes :
- Pour l'observation de ¹H avec découplage de ²⁷Al(¹H{²⁷Al}), le première mesure est une expérience de contrôle, dans laquelle un rotor synchronisé ¹H séquence spin-écho (90°-τ-180°-τ) est appliqué avec τ étant une période de rotor.
- La seconde expérience est le même spin-echo que la première expérience excepté que pendant la première moitié de l'écho (τ) sur les spins ¹H observés, les spins ²⁷Al sont continuellement irradiés.

L'irradiation radio-fréquence de grande puissance et continue des spins ²⁷Al dans des conditions de rotation à l'angle magique (Magic Angle Spinning en anglais ou MAS, affecte l'intensité de l'écho des spins ¹H si un aluminium est à proximité, comme par exemple un dipolaire couplé. Le spectre de différence TRAPDOR (Figure 19b) est obtenu en soustrayant le spectre TRAPDOR du spectre de contrôle, et indique le couplage dipolaire. Le signal restant dans le spectre de différence montre que seul le signal de l'eau est significativement affecté et ce dû à la proximité de ses protons aux noyaux ²⁷Al. La liaison de l'eau à l'aluminium indique l'acidité Bronsted de ces sites.

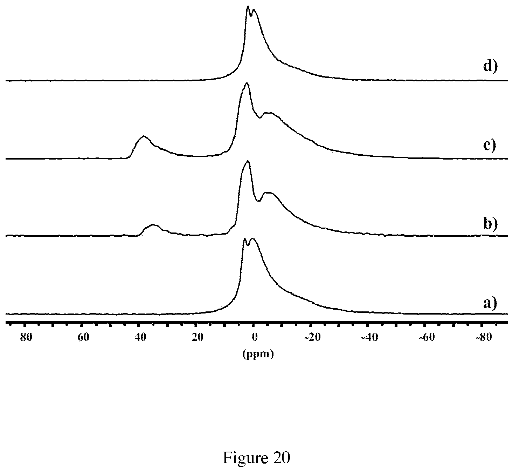

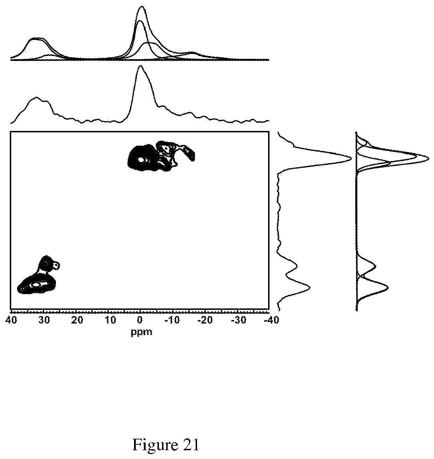

La figure 20 montre le spectre ²⁷Al RMN MAS de MIL-100 à des temps de chauffage successifs, sous différentes formes déshydratées, entièrement hydraté (figure 20a) à partiellement déshydraté (figures 2b-c), et après une ré-hydratation ultérieure (figure 2d). Après 4h à 130°C, un signal additionnel apparaît sur le spectre ²⁷Al autour des déplacements chimiques isotropiques de 37 ppm compatible avec des espèces penta-coordinées d'AI. En augmentant la température de traitement, le signal augmente. Ces résultats montrent qu'un composé pentacoordiné d'AI par trimère d'Al₃ peut être généré après déshydratation, ce qui confirme l'existence des sites insaturés coordinatifs (CUS) dans ces matériaux. De tels sites existent, montrant au moins deux sites CUS comme démontré par l'expérience Multi-Quanta avec Rotation à l'Angle Magique ou MQMAS [30] présentée dans la figure 21. Cela est une preuve claire d'une propriété acide de Lewis potentiel du composé. Ce qui est intéressant c'est que le procédé est totalement réversible après réhydratation.

Ces résultats montrent la particularité de MIL-100(Al) en ce qui concerne ses propriétés acido-basiques. En effet, dans MIL-100(Al), sur le même trimère Al₃, un site peut présenter à la fois une acidité de type Bronsted et une acidité de type Lewis. La déshydratation, qui se traduit par l'apparition d'un aluminium penta-coordonné dans MIL-100(Al), est différente de celle de ses correspondants au chrome et au fer. Pour MIL-100(Al), un aluminium sur trois change de coordination au lieu de deux sur trois décrits pour ses correspondants au chrome ou au fer. Par ailleurs, les autres phases comme par exemple MIL-96(Al) et MIL-110(AI) qui peuvent être formées comme impuretés lors de la préparation de MIL-100 (Al), bien que présentant l'aptitude à perdre une molécule d'eau et donc à former un aluminium penta-coordonné, ne présentent les propriétés de MIL-100 (Al). Dans le cas de MIL-96(AI), la porosité et l'accessibilité des pores sont radicalement différentes de MIL-100(Al). De plus, la déshydratation des sites réactifs dans MIL-96(Al) est bloquée par l'eau présente dans ses pores. Pour MIL-110 (Al), sa stabilité thermique est bien moindre que celle de MIL-100 (Al).

Seul MIL-100 réunit, la porosité maximale, les chemins de diffusion (la possibilité de communication entre les pores) autorisant l'entrée et la sortie de molécules de taille importante, et une activation de ses sites par déshydratation à basse température (comme par exemple 130-150°C) et sélective de ses sites. Ces propriétés particulières de MIL-100(Al) rendent indispensable de l'obtenir sous forme d'une phase pure pour disposer de ses propriétés. MIL-100(Al) sous forme d'un mélange de phases, comme par exemple avec MIL-96(Al) et/ou MIL-110(Al), ne peut en aucun cas présenter des propriétés comparables à celles de MIL-100 (Al) pur.

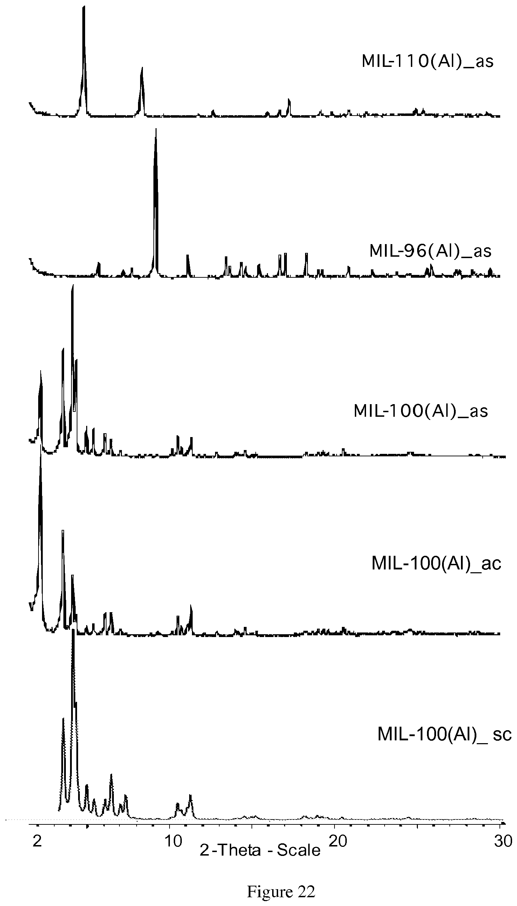

Dans la figure 22 le diffractogramme de MIL-100 se distinguent clairement des autres phases MIL-96 et MIL-110, qui permet une signature unique pour MIL-100. Par conséquent, la technique des rayons X permet la distinction des trois phases différentes dans le système chimique Al/btc/H₂O.

Par ailleurs, le diffractograme de MIL-100_ac (activé) est proche de celui de MIL-100_as (tel que synthétisé) ce qui montre que la forme activée de MIL-100 (avec des pores vides) est stable et la structure 3D est maintenue pendant le procédé d'activation.

Le dernier diagramme dans la figure 22, est un diagramme calculé à partir de données atomiques d'un mono-cristal de MIL-100. Cela montre que le diffractogramme des rayons X de MIL-100 est en très bon accord avec celui calculé, reflétant la grande pureté du produit MIL-100 obtenu.

### Exemple 2 : Préparation de MIL-120 (Al)

Le composé MIL-120 (Al) est obtenu à partir d'un mélange de 3,2 g de nitrate d'aluminium (Al(NO₃)₃·9H₂O), 0,5 g d'acide 1,2,4,5-benzènetétracarboxylique, 3,2 ml de soude (NaOH 4 M) et 20 ml d'eau placés dans une cellule en téflon d'un volume de 125 ml puis insérée dans un autoclave en acier de marque commerciale Parr (marque enregistrée). La réaction a lieu à 210°C pendant 24h dans un four. 0,68 g de MIL-120 (Al) est obtenu. Le pH de la réaction est de 1,85. Le produit est lavé par chauffage sous reflux dans l'eau distillée pendant une nuit, puis est filtré à température ambiante. Il est activé par chauffage à 200°C pendant une nuit.

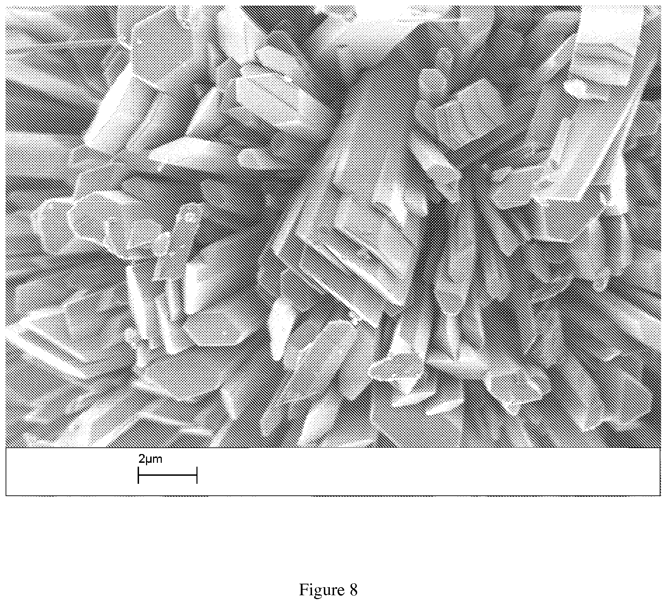

L'examen de ce solide au microscope électronique révèle la présence de petits cristaux en forme d'aiguilles avec une taille moyenne de 5 à 30 microns (figure 8).

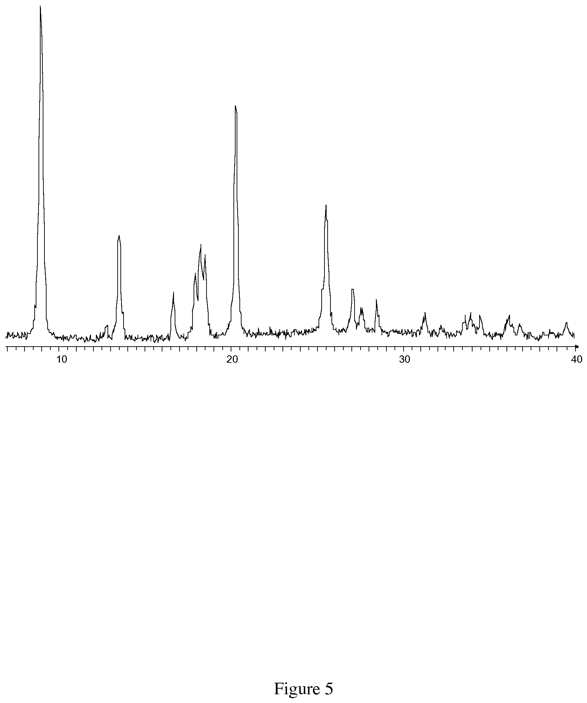

Ce solide cristallise dans une maille monoclinique avec les paramètres a = 9,748(1) Å, b = 20,048(1) Å, c = 7,489(1) Å, β = 134,42(1), V = 1045,3(2) Å³. Le diffractogramme RX est présenté en figure 5.

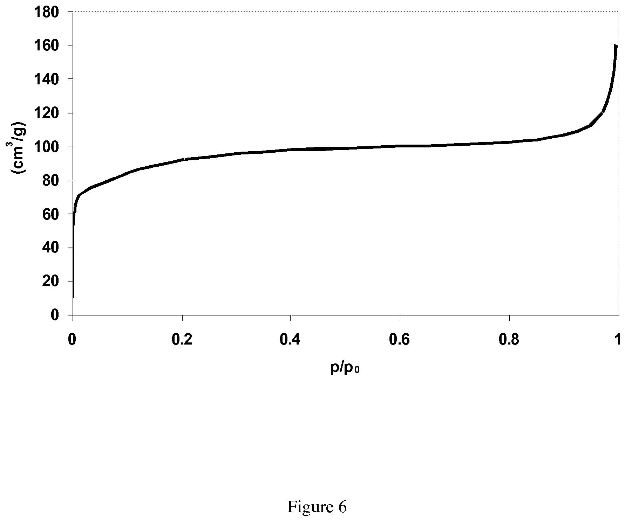

La surface spécifique BET est de 300 m².g⁻¹ et la surface Langmuir est de 430 m².g⁻¹ (figure 6).

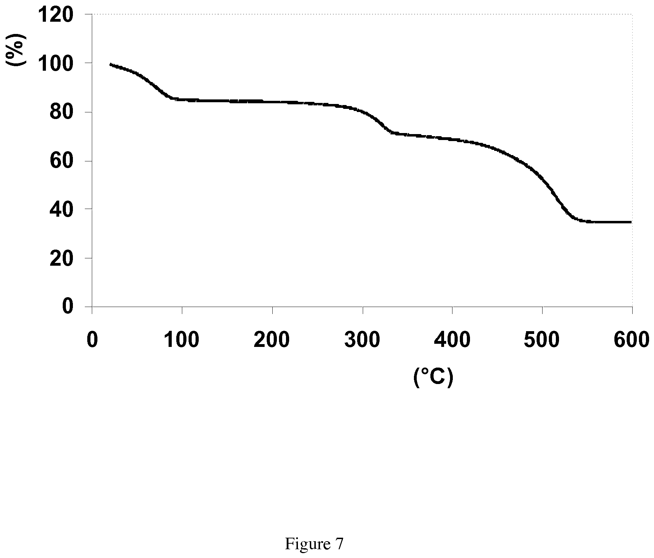

L'analyse thermogravimétrique indique que le matériau MIL-120 (Al) est stable jusqu'à 290°C (figure 7).

La combinaison de ces différentes analyses de caractérisation montre bien qu'il s'agit d'un matériau très bien identifié avec une très grande pureté cristalline.

### Exemple 3: Préparation de MIL-121 (Al)

Le composé MIL-121 (Al) est obtenu à partir d'un mélange de 9,6 g de nitrate d'aluminium (Al(NO₃)₃·9H₂O), 3,2 g d'acide 1,2,4,5-benzènetétracarboxylique et 40 ml d'eau placés dans une cellule en téflon d'un volume de 125 ml puis insérée dans un autoclave en acier de marque commerciale Parr (marque enregistrée). La réaction a lieu à 210°C pendant 24h dans un four. Le pH de la réaction est de 0,2. 3,45 g de MIL-121 (Al) est obtenu. Il est activé par chauffage à 380°C pendant 4h.

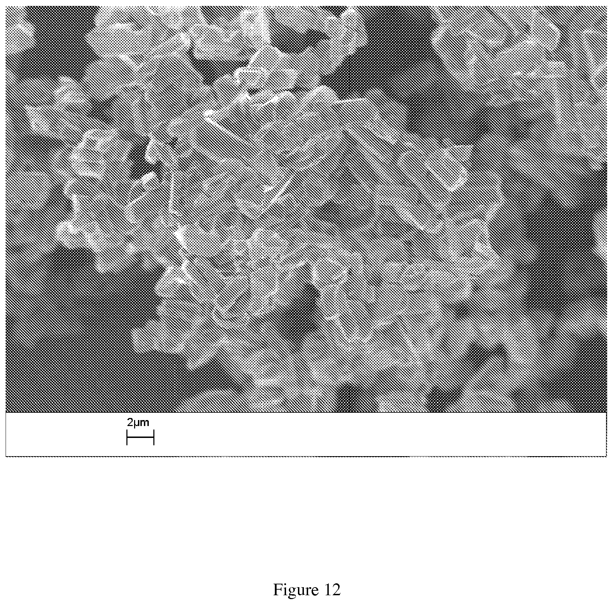

L'examen de ce solide au microscope électronique révèle la présence de petits cristaux en forme de parallélépipède avec une taille moyenne de 2 à 5 microns (figure 12).

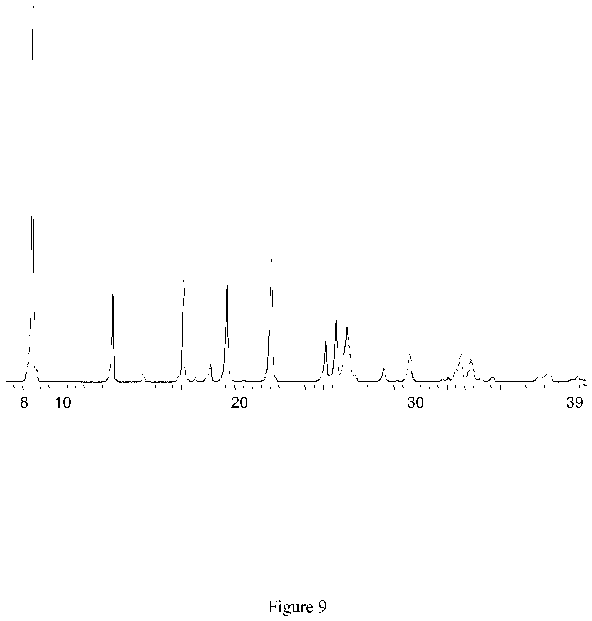

Ce solide cristallise dans une maille monoclinique avec les paramètres a = 17,58(1) Å, b = 13,55(1) Å, c = 6,66(1) Å, β = 113,19(1), V = 1045,3(2) Å³. Le diffractogramme RX est présenté en figure 9.

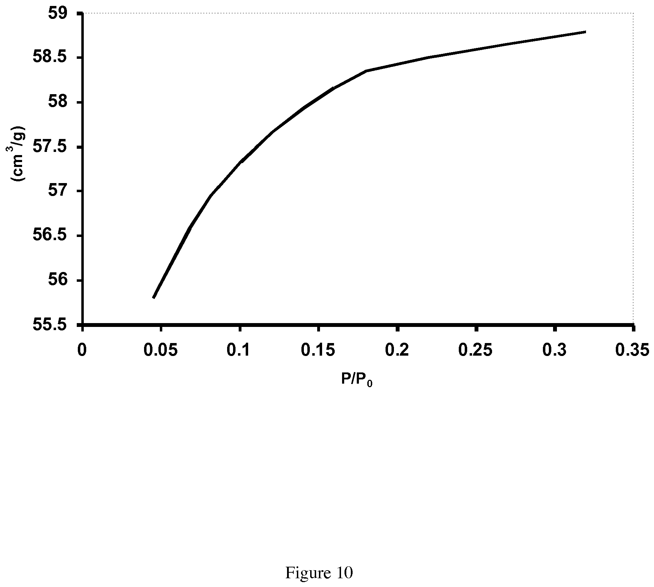

La surface spécifique BET est 173 m².g⁻¹ et la surface Langmuir est 258 m².g⁻¹ (figure 10).

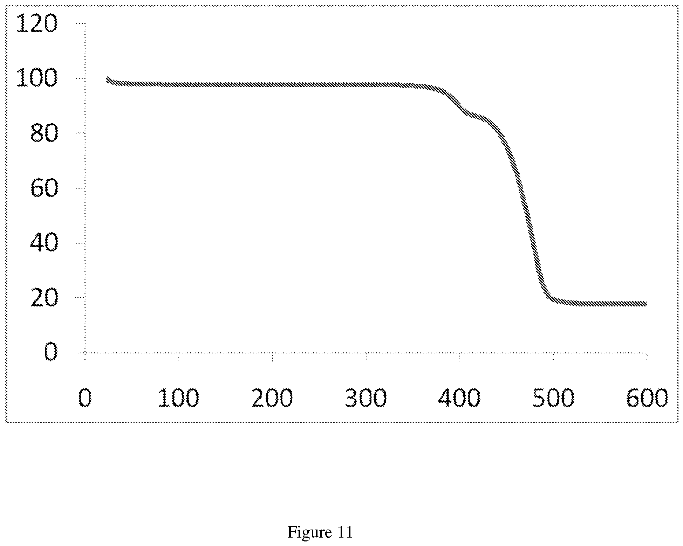

L'analyse thermogravimétrique indique que le matériau MIL-121 (Al) est stable jusqu'à 430°C (figure 11).

La combinaison de ces différentes analyses de caractérisation montre bien qu'il s'agit d'un matériau très bien identifié avec une très grande pureté cristalline.

### Listes des références

[1] Reticular Synthesis and the Design of New Materials, O.M. Yaghi, M. O'Keeffe, N.W. Ockwig, H.K. Chae, M. Eddaoudi and J. Kim, Nature, 423, 705-14 (2003).
[2] Functional Porous Coordination Polymers, S. Kitagawa, R. Kitaura and S.-I. Noro, Angew. Chem. Int. Ed., 43, 2334-75 (2004).
[3] Hybrid Porous Solids: Past, Present, Future, G. Férey, Chem. Soc. Rev., 37, 191-214 (2008).
[4] Hydrogen Storage in Microporous Metal-Organic Frameworks, N.L. Rosi, J. Eckert, M. Eddaoudi, D.T. Vodak, J. Kim, M. O'Keeffe and O.M. Yaghi, Science, 300, 1127-9 (2003).
[5] Hydrogen Adsorption in the Nanoporous Metal-benzenedicarboxylate M(OH)(O2C-C6H4-CO2) (M = Al3+, Cr3+), MIL-53, G. Férey, M. Latroche, C. Serre, F. Millange, T. Loiseau and A. Percheron-Guégan, Chem. Commun., 2976-7 (2003).
[6] Hydrogen Storage in the Giant-Pore Metal-Organic Frameworks MIL-100 and MIL-101, M. Latroche, S. Surblé, C. Serre, C. Mellot-Draznieks, P.L. Llewellyn, J.-H. Lee, J.-S. Chang, S.H. Jhung and G. Férey, Angew. Chem. Int. Ed., 45, 8227 (2006).
[7] Systematic Design of Pore Size and Functionality in Isoreticular MOFs and their Application in Methane Storage, M. Eddaoudi, J. Kim, N. Rosi, D. Vodak, J. Wachter, M. O'Keeffe and O.M. Yaghi, Nature, 295, 469-72 (2002).
[8] Different Adsorption Behaviors of Methane and Carbon Dioxide in the Isotypic Nanoporous Metal Terephthalates MIL-53 and MIL-47, S. Bourrelly, P. L. Llewellyn, C. Serre, F. Millange, T. Loiseau and G. Férey, J. Am. Chem. Soc., 127, 13519-21 (2005).
[9] Metal-Organic Frameworks as Efficient Materials for Drug Delivery, P. Horcajada, C. Serre, M. Vallet-Regi, M. Sebban, F. Taulelle and G. Férey, Angew. Chem. Int. Ed., 45, 5974 (2006).
[10] High Gas Adsorption in a Microporous Metal-Organic Framework with Open-Framework, O.M. Yaghi, WO 2006/110740 (2006).
[11] Isoreticular Metal-Organic Framework Process for Forming the Same and Systematic Design of Pore size and Functionality therein, with Application for Gas Storage, WO 02/088148 (2002).
[12] Metal-Organic Frameworks - Prospective Industrial Applications, U. Müller, M. Schubert, F. Teich, H. Pütter, K. Schierle-Arndt and J. Pastré, J. Mater. Chem., 16, 626-36 (2006).
[13] Shaped Bodies Containing Metal-Organic Frameworks, M. Hesse, U. Müller, O.M. Yaghi, WO 2006/050898 (2006).
[14] A Rationale for the Large Breathing of the Porous Aluminum Terephthalate (MIL-53) Upon Hydration, T. Loiseau, C. Serre, C. Huguenard, G. Fink, F. Taulelle, M. Henry, T. Bataille and G. Férey, Chem. Eur. J., 10, 1373-82 (2004).
[15] Hydrothermal Synthesis and Crystal Structure of a New Three-Dimensional Aluminum-Organic Framework MIL-69 with 2,6-Naphthalenedicarboxylate (ndc), Al(OH)(ndc)·H2O, T. Loiseau, C. Mellot-Draznieks, H. Muguerra, G. Férey, M. Haouas and F. Taulelle, C. R. Chimie, Special Issue on Crystalline and Organized Porous Solids, 8, 765-72 (2005).
[16] MIL-96, a Porous Aluminum Trimesate 3D Structure Constructed from a Hexagonal Network of 18-Membered Rings and µ3-Oxo-Centered Trinuclear Units, T. Loiseau, L. Lecroq, C. Volkringer, J. Marrot, G. Férey, M. Haouas, F. Taulelle, S. Bourrelly, P. L. LIewellyn and M. Latroche, J. Am. Chem. Soc., 128, 10223-30 (2006).
[17] A Microdiffraction Set-up for Nanoporous Metal-Organic-Framework-Type Solids, C. Volkringer, D. Popov, T. Loiseau, N. Guillou, G. Férey, M. Haouas, F. Taulelle, C. Mellot-Draznieks, M. Burghammer and C. Riekel, Nature Materials, 6, 760-4 (2007).
[18] Design and Synthesis of an Exceptionally Stable and Highly Porous Metal-Organic Framework. H. Li, M. Eddaoudi, M. O'Keeffe, O.M. Yaghi, Nature, 402, 276-9 (1999).
[19] A Chemically Functionalizable Nanoporous Material [Cu3(TMA)2(H2O)3]n, S.S.-Y. Chui, S.M.-F. Lo, J.P.H. Charmant, A. Guy Orpen and I.D. Williams, Science, 283, 1148 (1999).
[20] Method for Producing Organometallic Framework Materials Containing Main Group Metal Ions, M. Schubert, U. Müller, M. Tonigold, R. Ruetz, WO 2007/023134 (2007).
[21] Mesoporous Metal-Organic Framework, M. Schubert, U. Müller, H. Mattenheimer, M. Tonigold, WO 2007/023119 (2007).
[22] Organometallic Aluminum Fumarate Backbone Material, C. Kiener, U. Müller, M. Schubert, WO 2007/118841 (2007).
[23] Dotierte Metallorganische Gerüstmaterialien, M. Schubert, U. Müller, R. Ruetz, S. Hatscher, DE 10 2005 053 430 (2005).
[24] MOF-Compounds as Gas Adsorbers, K.O. Kongshaug, R.H. Heyn, H. Fjellvag, R. Blom, WO 2007/128994 (2007).
[25] « Handbook of Hydrothermal Technology, Editeurs: K. Byrappa & M. Yoshimura, William Andrew publishing, Noyes Publications Norwich, New York, USA, (2001).
[26] Rabenau et al., Angew. Chem. Int. Ed. 24 1026-40 (1985).
[27] « How hydration drastically improves adsorption selectivity for CO2 over CH4 in the flexible Chromium terephthalate MIL-53 », P.L. Llewellyn, S. Bourrelly, C. Serre, Y. Filinchuk and G. Férey, Angew. Chem. Int. Ed. 45 7751-4 (2006).
[28] « Synthesis and catalysis properties of MIL-100(Fe), an iron(III) carboxylate with large pores » P. Horcajada, S. Surblé, C. Serre, D.-Y. Hong, Y.-K. Seo, J.-S Chang, J.-M. Grenèche, I. Margiolaki and G. Férey, Chem. Commun. 2820-2 (2007) ; « Catalytic properties of MIL-101 » A. Henschel, K. Gedrich, R. Kraehnert and S. Kaskel, Chem. Commun. 4192-4 (2008); « Amine grafting on coordinatively unsaturated metal centers of MOFs: consequences for catalysis and metal encapsulation » Y.K. Hwang, D.-Y. Hong, J.-S. Chang, S.H. Jhung, Y.-K. Seo, J. Kim, A. Vimont, M. Daturi, C. Serre and G. Férey, Angew. Chem. Int. Ed. 47 4144-8 (2008).
[29] E.R.H. van Eck, R. Janssen, W. E. J. R. Maas, W. S. Veeman, Chem. Phys Letters, 1990, 174, 428.
[30] Medek A, Harwood JS, Frydman L, J. Am. Chem. Soc. 1995, 117, 12779.

## Revendications

1. Procédé de préparation hydrothermale d'un solide constitué de réseau métal-organique (MOF) de carboxylates d'aluminium poreux et cristallisé, comprenant au moins les étapes suivantes :
(i) on mélange dans un solvant aqueux :
- au moins un précurseur inorganique métallique se présentant sous la forme de métal Al, d'un sel de métal Al³⁺ ou d'un complexe de coordination comprenant l'ion métallique Al³⁺ ; et
- au moins un précurseur organique du ligand L, L étant un ligand tri-ou tétra-carboxylate de formule R⁰(COO⁻)_{q} où R⁰ représente
• un radical aryle mono- ou poly-cyclique, fusionné ou non, comprenant de 6 à 50 atomes de carbone,
• un radical hétéroaryle mono- ou poly-cyclique, fusionné ou non, comprenant de 4 à 50 atomes de carbone,
le radical R⁰ étant éventuellement substitué par un ou plusieurs groupes indépendamment choisis dans le groupe comprenant C₁₋₁₀alkyle, C₂₋₁₀alcène, C₂₋₁₀alcyne, C₃₋₁₀cycloalkyle, C₁₋₁₀hétéroalkyle, C₁₋₁₀haloalkyle, C₆₋₁₀aryle, C₃₋₂₀hétérocyclique, C₁₋₁₀alkylC₆₋₁₀aryle, C₁₋₁₀alkylC₃₋₁₀hétéroaryle, F, Cl, Br, I, -NO₂, - CN, -CF₃, -CH₂CF₃, -OH, -CH₂OH, -CH₂CH₂OH, -NH₂, -CH₂NH₂, - NHCHO, -COOH, -CONH₂, -SO₃H, -PO₃H₂,
• q = 3à4;
(ii) on ajuste le pH du mélange à un pH compris entre 0,4 et 0,7
(iii) on chauffe le mélange obtenu en (ii) pendant une durée de 1 à 24 heures, à une température supérieure à 130°C de manière à obtenir ledit solide, et dans lequel dans l'étape (i) le précurseur inorganique métallique et le précurseur organique du ligand L sont mélangés dans un rapport molaire compris entre 1 et 5.

2. Procédé selon la revendication 1, dans lequel le solvant aqueux est l'eau.

3. Procédé selon l'une quelconque des revendications 1 à 2, dans lequel le précurseur inorganique métallique se présente sous la forme de métal Al ou d'un sel de métal Al³⁺.

4. Procédé selon l'une quelconque des revendications 1 à 3, dans lequel L est un ligand tri- ou tétra-carboxylate choisi dans le groupe comprenant : C₆H₃(CO₂⁻)₃(benzène-1,2,4-tricarboxylate), C₆H₃(CO₂⁻)₃(benzène-1,3,5-tricarboxylate), C₂₄H₁₅(CO₂⁻)₃(benzène-1,3,5-tribenzoate), C₄₂H₂₇(CO₂⁻)₃ (1,3,5-tris[4'-carboxy(1,1'-biphenyl-4-yl)benzene), C₆H₂(CO₂⁻)₄(benzène-1,2,4,5-tétracarboxylate, C₁₀H₄(CO₂⁻)₄(naphtalène-2,3,6,7-tétracarboxylate), C₁₀H₄(CO₂⁻)₄(naphtalène-1,4,5,8-tétracarboxylate), C₁₂H₆(CO₂⁻)₄(biphényl-3,5,3',5'-tétracarboxylate.

5. Procédé selon l'une quelconque des revendications 1 à 4 dans lequel le Ph initial du mélange est ajusté à 0,6 et le pH final à un pH allant de 1,5 à 1,8.

6. Procédé selon l'une quelconque des revendications 1 à 5, dans lequel dans l'étape (ii) le pH du mélange est ajusté par ajout d'un acide ou d'une base.

7. Procédé selon l'une quelconque des revendications 1 à 6, dans lequel dans l'étape (iii) on chauffe le mélange à une température de 140°C à 220°C.

8. Procédé selon l'une quelconque des revendications 1 à 7, dans lequel l'étape (iii) est réalisée à une pression autogène supérieure à 10⁵ Pa.

9. Procédé selon l'une quelconque des revendications 1 à 8, comprenant, en outre, une étape d'activation (iv) dans laquelle le solide obtenu en (iii) est chauffé à une température de 80°C à 350°C.

10. Procédé selon la revendication 9 dans lequel l'étape d'activation (iv) se fait dans un solvant choisi dans le groupe comprenant le DMF, le DEF, le méthanol, l'éthanol, le DMSO.

11. Procédé selon l'une des revendications 9 ou 10, comprenant une étape d'activation (iv) dans laquelle le solide obtenu en (iii) est chauffé pendant 1 à 36 heures.

12. Solide constitué de réseau métal-organique (MOF) de carboxylates d'aluminium poreux et cristallisé constitué d'une seule phase et présentant un degré de pureté d'au moins 95% en masse, susceptible d'être obtenu par le procédé selon l'une quelconque des revendication 1 à 11, comprenant une succession tridimensionnelle de motifs de formule (I):
AlₘOₖXₗLₚ (I)
dans laquelle :
▪ Al représente l'ion métallique Al³⁺ ;
▪ m est de 1 à 15;
▪ k est 0 à 15 ;
▪ l est 0 à 10 ;
▪ p est 1 à 10 ;
m, k, l et p sont choisis de façon à respecter la neutralité des charges dudit motif ;
• X est un anion choisi dans le groupe comprenant OH⁻, Cl⁻, F⁻, I⁻, Br, SO₄²⁻, NO₃⁻, ClO₄⁻, PF₆⁻, BF₃⁻, R¹-(COO⁻)ₙ, R¹-(SO₃⁻)ₙ, R¹-(PO₃⁻)ₙ, où R¹ est un hydrogène, un alkyle en C₁ à C₁₂, linéaire ou ramifié, éventuellement substitué, n = 1 à 4 ;
▪ L est un ligand tel que défini dans la revendication 1.

13. Solide selon la revendication 12, dans lequel l'anion X est choisi dans le groupe comprenant OH⁻, Cl⁻, F⁻, ClO₄⁻.

14. Solide selon l'une des revendications 12 ou 13, comprenant un pourcentage massique d'Al en phase sèche de 5 à 50%.

15. Solide selon l'une quelconque des revendications 12 à 14 présentant une surface spécifique BET allant de 100 à 2500 m².g⁻¹.

16. Solide selon l'une quelconque des revendications 12 à 15 présentant une surface spécifique Langmuir allant de 150 à 3500 m².g⁻¹.

17. Solide selon l'une quelconque des revendications 12 à 16 dans lequel le diamètre des pores dudit solide est de 0,2 à 6 nm.

18. Solide selon l'une quelconque des revendications 12 à 17 dans lequel ledit solide présente un volume poreux de à 0,1 à 4 cm³/g.

19. Solide selon l'une quelconque des revendications 12 à 18 dans lequel ledit solide présente une stabilité thermique jusqu'à une température de 500°C.

20. Solide selon l'une quelconque des revendications 12 à 19 dans lequel ledit solide est sous forme de cristallites avec une longueur qui varie de 0,1 µm à 150 µm.

21. Utilisation d'un solide selon l'une quelconque des revendications 12 à 20 pour le stockage des molécules liquides ou gazeuses.

22. Utilisation selon la revendication 21 pour la séparation sélective de gaz.

## Patentansprüche

1. Verfahren zur hydrothermalen Herstellung eines Feststoffs, der aus einem metallorganischen Netzwerk (MOF) von porösen und kristallisierten Aluminiumcarboxylaten besteht, umfassend mindestens die folgenden Schritte:
(i) Mischen in einem wässrigen Lösungsmittel:
- mindestens einen metallischen anorganischen Vorläufer, der die Form eines Metalls Al, eines Metallsalzes Al³⁺ oder eines Koordinationskomplexes, der das Metallion Al³⁺ umfasst, aufweist; und
- mindestens einen organischen Vorläufer des Liganden L, wobei L ein Tri- oder Tetracarboxylat-Ligand der Formel R⁰(COO⁻)_{q} ist, wobei R⁰ steht für
-- einen mono- oder polycyclischen Arylrest, anelliert oder nicht, 6 bis 50 Kohlenstoffatome umfassend,
-- einen mono- oder polycyclischen Heteroarylrest, anelliert oder nicht, 4 bis 50 Kohlenstoffatome umfassend,
wobei der Rest R⁰ gegebenenfalls durch eine oder mehrere Gruppen substituiert ist, die unabhängig ausgewählt sind aus der Gruppe umfassend C₁₋₁₀-Alkyl, C₂₋₁₀-Alken, C₂₋₁₀-Alkin, C₃₋₁₀-Cycloalkyl, C₁₋₁₀-Heteroalkyl, C₁₋₁₀-Haloalkyl, C₆₋₁₀-Aryl, C₃₋₂₀-Heterocyclus, C₁₋₁₀-Alkyl-C₆₋₁₀-aryl, C₁₋₁₀-Alkyl-C₃₋₁₀-heteroaryl, F, Cl, Br, I, -NO₂, -CN, -CF₃, -CH₂CF₃, -OH, -CH₂OH, -CH₂CH₂OH, -NH₂, -CH₂NH₂, -NHCHO, -COOH, -CONH₂, -SO₃H, -PO₃H₂,
-- q = 3 bis 4;
(ii) Einstellen des pH-Werts des Gemischs auf einen pH-Wert zwischen 0,4 und 0,7
(iii) Erhitzen des in (ii) erhaltenen Gemischs für eine Dauer von 1 bis 24 Stunden bei einer Temperatur von mehr als 130 °C, um den Feststoff zu erhalten, und wobei im Schritt (i) der metallische anorganische Vorläufer und der organische Vorläufer des Liganden L in einem Molverhältnis zwischen 1 und 5 gemischt werden.

2. Verfahren nach Anspruch 1, wobei das wässrige Lösungsmittel Wasser ist.

3. Verfahren nach einem der Ansprüche 1 bis 2, wobei der metallische anorganische Vorläufer die Form eines Metalls Al oder eines Metallsalzes Al³⁺ aufweist.

4. Verfahren nach einem der Ansprüche 1 bis 3, wobei L ein Tri- oder Tetracarboxylat-Ligand ist, der ausgewählt ist aus der Gruppe umfassend:
C₆H₃(CO₂⁻)₃ (Benzol-1,2,4-tricarboxylat), C₆H₃(CO₂⁻)₃ (Benzol-1,3,5-tricarboxylat), C₂₄H₁₅(CO₂⁻)₃(Benzol-1,3,5-tribenzoat), C₄₂H₂₇(CO₂⁻)₃(1,3,5-Tris-[4'-carboxy-(1,1'-biphenyl-4-yl)]benzol), C₆H₂(CO₂⁻)₄(Benzol-1,2,4,5-tetracarboxylat), C₁₀H₄(CO₂⁻)₄(Naphthalin-2,3,6,7-tetracarboxylat), C₁₀H₄(CO₂⁻)₄(Naphthalin-1,4,5,8-tetracarboxylat), C₁₂H₆(CO₂⁻)₄(Biphenyl-3,5,3',5'-tetracarboxylat).

5. Verfahren nach einem der Ansprüche 1 bis 4, wobei der anfängliche pH-Wert des Gemischs auf 0,6 eingestellt wird und der endgültige pH-Wert auf einen pH-Wert eingestellt wird, der von 1,5 bis 1,8 reicht.

6. Verfahren nach einem der Ansprüche 1 bis 5, wobei im Schritt (ii) der pH-Wert des Gemischs durch Zugabe einer Säure oder einer Base eingestellt wird.

7. Verfahren nach einem der Ansprüche 1 bis 6, wobei im Schritt (iii) das Gemisch auf eine Temperatur von 140 °C bis 220 °C erhitzt wird.

8. Verfahren nach einem der Ansprüche 1 bis 7, wobei der Schritt (iii) bei einem autogenen Druck von mehr als 10⁵ Pa durchgeführt wird.

9. Verfahren nach einem der Ansprüche 1 bis 8, das außerdem einen Aktivierungsschritt (iv) umfasst, wobei der in (iii) erhaltene Feststoff auf eine Temperatur von 80 °C bis 350 °C erhitzt wird.

10. Verfahren nach Anspruch 9, wobei der Aktivierungsschritt (iv) in einem Lösungsmittel vorgenommen wird, das ausgewählt ist aus der Gruppe umfassend DMF, DEF, Methanol, Ethanol, DMSO.

11. Verfahren nach einem der Ansprüche 9 oder 10, das einen Aktivierungsschritt (iv) umfasst, wobei der in (iii) erhaltene Feststoff für 1 bis 36 Stunden erhitzt wird.

12. Feststoff, der aus einem metallorganischen Netzwerk (MOF) von porösen und kristallisierten Aluminiumcarboxylaten besteht, aus einer einzigen Phase besteht und einen Reinheitsgrad von mindestens 95 Massen-% aufweist, dazu geeignet ist, durch das Verfahren nach einem der Ansprüche 1 bis 11 erhalten zu werden, eine dreidimensionale Abfolge von Mustern der Formel (I) umfasst:
AlₘOₖXₗLₚ (I),
wobei:
- Al für das Metallion Al³⁺ steht;
- m 1 bis 15 ist;
- k 0 bis 15 ist;
- l 0 bis 10 ist;
- p 1 bis 10 ist;
wobei m, k, l und p so gewählt sind, dass die Neutralität von Ladungen des Musters eingehalten wird;
- X ein Anion ist, das ausgewählt ist aus der Gruppe umfassend OH⁻, Cl⁻, F⁻, I⁻, Br⁻, SO₄²⁻, NO₃⁻, ClO₄⁻, PF₆⁻, BF₃⁻, R¹-(COO⁻)ₙ, R¹⁻(SO₃⁻)ₙ, R¹-(PO₃⁻)ₙ, wobei R¹ ein Wasserstoff, ein C₁- bis C₁₂-Alkyl, gerade oder verzweigt, gegebenenfalls substituiert, ist, n = 1 bis 4;
- L ein wie in Anspruch 1 definierter Ligand ist.

13. Feststoff nach Anspruch 12, wobei das Anion X ausgewählt ist aus der Gruppe umfassend OH⁻, Cl⁻, F⁻, ClO₄⁻.

14. Feststoff nach einem der Ansprüche 12 oder 13, der einen Massenprozentanteil von Al in der Trockenphase von 5 bis 50 % umfasst.

15. Feststoff nach einem der Ansprüche 12 bis 14, der eine spezifische BET-Oberfläche aufweist, die von 100 bis 2500 m².g⁻¹ reicht.

16. Feststoff nach einem der Ansprüche 12 bis 15, der eine spezifische Oberfläche nach Langmuir aufweist, die von 150 bis 3500 m².g⁻¹ reicht.

17. Feststoff nach einem der Ansprüche 12 bis 16, wobei der Durchmesser von Poren des Feststoffs 0,2 bis 6 nm beträgt.

18. Feststoff nach einem der Ansprüche 12 bis 17, wobei der Feststoff ein Porenvolumen von 0,1 bis 4 cm³/g aufweist.

19. Feststoff nach einem der Ansprüche 12 bis 18, wobei der Feststoff eine Wärmebeständigkeit bis zu einer Temperatur von 500 °C aufweist.

20. Feststoff nach einem der Ansprüche 12 bis 19, wobei der Feststoff in der Form von Kristalliten mit einer Länge ist, die von 0,1 µm bis 150 µm variiert.

21. Verwendung eines Feststoffs nach einem der Ansprüche 12 bis 20 zur Speicherung von flüssigen oder gasförmigen Molekülen.

22. Verwendung nach Anspruch 21 zur selektiven Gastrennung.

## Claims

1. Process for the hydrothermal preparation of a solid made up of a metal-organic network (MOF) of porous and crystallised aluminium carboxylates, comprising at least the following steps :
(i) mixing in an aqueous solvent:
- at least one inorganic metal precursor in the form of metal Al, a metal salt Al³⁺ or a coordination complex comprising the metal ion Al³⁺; and
- at least one organic precursor of ligand L, L being a tri- or tetra-carboxylate ligand of formula R⁰(COO-)_{q} wherein R⁰ represents
• a mono- or poly-cyclic aryl radical, fused or not, comprising from 6 to 50 carbon atoms,
• a mono- or poly-cyclic heteroaryl radical, fused or not, comprising from 4 to 50 carbon atoms,
the radical R⁰ being optionally substituted by one or more groups independently selected from the group comprising C₁₋₁₀ alkyl, C₂₋₁₀alkene, C₂₋₁₀alkyne, C₃₋₁₀cycloalkyl, C₁₋₁₀heteroalkyl, C₁₋₁₀ haloalkyl, C₆₋₁₀aryl, C₃₋₂₀heterocyclic, C₁₋₁₀alkylC₆₋₁₀aryl, C₁₋₁₀alkylC₃₋₁₀heteroaryl, F, Cl, Br, I, -NO₂, -CN, -CF₃, -CH₂CF₃, -OH, -CH₂OH, - CH₂CH₂OH, -NH₂, -CH₂NH₂, -NHCHO, -COOH, -CONH₂, -SO₃H, - PO₃H₂,
• q = 3 to 4 ;
(ii) adjusting the pH of the mixture between 0.4 and 0.7, and
(iii) heating the mixture obtained in (ii) for a period of 1 to 24 hours, to a temperature above 130°C so as to obtain said solid, and wherein in step (i) the inorganic metal precursor and the organic precursor of ligand L are mixed in a molar ratio between 1 and 5.

2. A process according to claim 1, wherein the aqueous solvent is water.

3. A process according to any one of claims 1 to 2, wherein the inorganic metal precursor is in the form of metal Al or a metal salt Al³⁺.

4. A process according to any one of claims 1 to 3, wherein L is a tri- or tetra-carboxylate ligand selected from the group comprising :
C₆H₃(CO₂⁻)₃(benzene-1,2,4-tricarboxylate), C₆H₃(CO₂⁻)₃(benzene-1,3,5-tricarboxylate), C₂₄H₁₅(CO₂⁻)₃(benzene-1,3,5-tribenzoate), C₄₂H₂₇(CO₂⁻)₃ (1,3,5-tris[4'-carboxy(1,1'-biphenyl-4-yl)benzene), C₆H₂(CO₂⁻)₄(benzene-1,2,4,5-tetracarboxylate, C₁₀H₄(CO₂⁻)₄(naphthalene-2,3,6,7-tetracarboxylate), C₁₀H₄(CO₂⁻)₄(naphthalene-1,4,5,8-tetracarboxylate), C₁₂H₆(CO₂⁻)₄(biphenyl-3,5,3',5'-tetracarboxylate).

5. A process according to any one of claims 1 to 4 wherein the initial pH of the mixture is adjusted to 0.6 and the final pH to a pH ranging from 1.5 to 1.8.

6. A process according to any one of claims 1 to 5, wherein in step (ii) the pH of the mixture is adjusted by adding an acid or base.

7. A process according to any one of claims 1 to 6, wherein in step (iii) the mixture is heated to a temperature of 140°C to 220°C.

8. A process according to any one of claims 1 to 7, wherein step (iii) is carried out at an autogenous pressure greater than 105 Pa.

9. A process according to any one of claims 1 to 8, further comprising an activation step (iv) wherein the solid obtained in (iii) is heated to a temperature of 80°C to 350°C.

10. A process according to claim 9 wherein the activation step (iv) is carried out in a solvent selected from the group comprising DMF, DEF, methanol, ethanol, DMSO.

11. A process according to claim 9 or 10, comprising an activation step (iv) wherein the solid obtained in (iii) is heated for 1 to 36 hours.

12. A solid made up a metal-organic network (MOF) of porous and crystallised aluminium carboxylates composed of a single phase and having a degree of purity of at least 95 mass.%, obtainable by the process according to any one of claims 1 to 11, comprising a three-dimensional succession of units of formula (I):
AlₘOₖXₗLₚ (I)
wherein :
• Al represents the metal ion Al³⁺ ;
• m is from 1 to 15;
• k is from 0 to 15 ;
• l is from 0 to 10 ;
• p is from 1 to 10 ;
m, k, I and p are chosen so as to respect the neutrality of the charges of said unit;
• X is an anion selected from the group comprising OH⁻, Cl⁻, F⁻, I⁻, Br⁻, SO4²⁻, NO₃⁻, ClO₄⁻, PF₆⁻, BF₃⁻, R¹-(COO⁻)ₙ, R¹-(SO₃⁻)ₙ, R¹-(PO₃⁻ )ₙ, wherein R¹ is hydrogen, a linear or branched, optionally substituted C₁₋₁₂alkyl, n = 1 to 4 ;
• L is a ligand as defined in claim 1.

13. A solid according to claim 12, wherein the anion X is selected from the group comprising OH⁻, Cl⁻, F⁻, ClO₄⁻.

14. A solid according to claim 12 or 13, comprising a dry phase Al weight percentage of 5 to 50%.

15. Solid according to any one of claims 12 to 14 having a BET specific surface area ranging from 100 to 2500 m².g⁻¹.

16. Solid according to any one of claims 12 to 15 having a specific Langmuir surface area ranging from 150 to 3500 m².g⁻¹.

17. A solid according to any one of claims 12 to 16 wherein the pore diameter of said solid is 0.2 to 6 nm.

18. A solid according to any one of claims 12 to 17 wherein said solid has a porous volume of 0.1 to 4 cm³/g.

19. A solid according to any one of claims 12 to 18 wherein said solid has a thermal stability up to a temperature of 500°C.

20. A solid according to any one of claims 12 to 19 wherein said solid is in the form of crystallites with a length which varies from 0.1 µm to 150 µm.

21. Use of a solid according to any one of claims 12 to 20 for the storage of liquid or gaseous molecules.

22. Use according to claim 21 for selective gas separation.
